# EUROPEAN PATENT APPLICATION

(11) **EP 4 553 671 A1**
(43) Date of publication of application: **14.05.2025**
(21) Application number: 23849168.2
(22) Date of filing: 07.07.2023
(51) Int. Cl.: G06F 16/22

(54) **METHOD AND APPARATUS FOR CREATING GLOBAL SECONDARY INDEX IN DISTRIBUTED DATABASE**

(30) Priority: 05.08.2022 CN 202210939851
(71) Applicant: Huawei Technologies Co., Ltd., Shenzhen, Guangdong 518129 (CN)
(72) Inventor: ZHOU, Zhaoqi, Shenzhen, Guangdong 518129 (CN); ZHANG, Shujie, Shenzhen, Guangdong 518129 (CN); LIU, Zonghao, Shenzhen, Guangdong 518129 (CN); LIU, Baozhu, Shenzhen, Guangdong 518129 (CN)
(74) Representative: Isarpatent
(86) International application number: PCT/CN2023/106365
(87) International publication number: WO 2024/027459

(57) **Abstract**

This application provides a method and an apparatus for creating a global secondary index in a distributed database, applied to a first node. The method includes: receiving a first indication, where the first indication indicates to create a global secondary index with at least one attribute in a base table; sending, based on the first indication, a first request to a second node configured to store the base table, where the first request is used to request to obtain first target information, and the first target information includes the at least one attribute in the base table; and receiving the first target information from the second node, and creating the global secondary index based on the first target information. According to the solution provided in this application, a global secondary index with high availability can be created when performance and costs are ensured.

## Description

### CROSS-REFERENCE TO RELATED APPLICATIONS

This application claims priority to Chinese Patent Application No. 202210939851.7, filed with the China National Intellectual Property Administration on August 5, 2022 and entitled "METHOD AND APPARATUS FOR CREATING GLOBAL SECONDARY INDEX IN DISTRIBUTED DATABASE", which is incorporated herein by reference in its entirety.

### TECHNICAL FIELD

This application relates to the field of data processing technologies, and in particular, to a method and an apparatus for creating a global secondary index in a distributed database.

### BACKGROUND

A base table is an object used to store data in a distributed database. The base table may be a set of a plurality of rows and a plurality of columns of data that is stored in at least one data node in a distributed manner. Data in a same column belongs to a same attribute, and data in a same row is a tuple, and may be stored in a same data node. Currently, the base table may have one or more global secondary indexes, and each global secondary index of the base table may include some columns of data in the base table. Therefore, the global secondary index of the base table may be used for data query. Similar to a storage manner of the data in the base table, data of the global secondary index of the base table may also be stored in at least one data node in a distributed manner.

When there is a base table in the distributed database, regardless of whether the base table has data, a user can create a global secondary index for one or more columns (namely, one or more attributes) in the base table based on a requirement. Currently, for a database structure, the global secondary index is usually created synchronously or asynchronously with a process of creating the base table.

A solution in which the global secondary index is created synchronously with the process of creating the base table can ensure data consistency between the global secondary index and the base table (that is, data in each column in the global secondary index is consistent with data in a corresponding column of the global secondary index in the base table). However, in the creation process, a plurality of pieces of intermediate data such as a base table snapshot need to be created and maintained. As a result, input/output (input/output) of the database increases in a short time, affecting performance of the database. To ensure performance of the database, currently, an architecture of the database is usually optimized to some extent, which increases maintenance costs of the database and reduces scalability and practicability of the database.

A solution in which the global secondary index is created asynchronously with the process of creating the base table can be dynamically optimized based on a load of the distributed database, to ensure performance of the distributed database. However, this solution increases processing time costs, and affects data consistency between the global secondary index and the base table (that is, data in each column of the global secondary index is consistent with data in a corresponding column of the global secondary index in the base table). This deteriorates availability of the global secondary index.

In conclusion, currently, the solutions for creating the global secondary index of the base table have high costs, poor performance, poor availability of the global secondary index, or the like.

### SUMMARY

This application provides a method and an apparatus for creating a global secondary index in a distributed database, to create a global secondary index with high availability while ensuring performance and costs.

According to a first aspect, this application provides a method for creating a global secondary index in a distributed database, applied to a first node. The method includes: receiving a first indication, where the first indication indicates to create a global secondary index with at least one attribute in a base table; sending, based on the first indication, a first request to a second node configured to store the base table, where the first request is used to request to obtain first target information, and the first target information includes the at least one attribute in the base table; and receiving the first target information from the second node, and creating the global secondary index based on the first target information.

In the method, in the distributed database, when creating the global secondary index, the first node may directly obtain, from the second node that stores the base table, information required for creating the global secondary index, and create the global secondary index based on the obtained information. This solution can be implemented based on an original architecture of the distributed database, and does not need to perform other additional optimization processing on the database architecture. Therefore, processing costs are low, and impact on performance of the database is low. In addition, after receiving the indication, the first node can quickly complete creation of the global secondary index. This has low requirements on a start condition and an application scenario. The first node may create the global secondary index at any time as required, to ensure high data consistency between the global secondary index and the base table, improve accuracy of global secondary index data, and improve availability of the global secondary index.

In a possible design, the first target information further includes location information, and the location information indicates a location, in the base table, of a tuple to which data of the at least one attribute belongs.

In the method, the first target information may be used to create the global secondary index, and the location information included in the first target information may be used to determine a storage location corresponding to data in the base table. Therefore, the global secondary index created based on first location information does not need to include a primary key, a distribution key, a partition key, or the like of the base table, so that a data volume of the global secondary index of the base table can be appropriately reduced, and index bloat can be reduced. Especially when the primary key and the distribution key of the base table relate to a large quantity of attribute columns, a volume of data that needs to be maintained after the global secondary index is created can be significantly reduced, and efficiency of using the global secondary index can be improved.

In a possible design, the second node includes at least one data node, and the data of the at least one attribute includes first data; and location information corresponding to the first data includes first location information and second location information; or the location information corresponding to the first data includes the second location information and a target distribution key used to determine the first location information, and the target distribution key is a distribution key that is in the base table and that corresponds to a tuple to which the first data belongs. The first location information indicates a first data node in which the first data is located, and the second location information indicates a storage location of the first data in the first data node.

In the method, a node in which data is located can be quickly determined, in a plurality of nodes that store the base table, based on the first location information in the location information corresponding to the data, and a more accurate data storage location can be further determined in the node based on the second location information in the location information corresponding to the data. Therefore, data can be quickly and efficiently located based on the first location information and the second location information in the location information.

In a possible design, the creating the global secondary index based on the first target information includes: when the location information corresponding to the first data includes the second location information and the target distribution key, determining the first location information based on the target distribution key; using the first data, the first location information, and the second location information as the tuple corresponding to the first data in the global secondary index; and storing, in a second data node, the tuple corresponding to the first data.

In the method, when the location information corresponding to the data includes distribution key data, the first node may obtain, through calculation based on the distribution key data, the first location information corresponding to the data, and then store, in the data node, the data and the first location information and the second location information corresponding to the data as the data in the global secondary index. In this way, the first location information with a small data volume can be used to replace the distribution key data with a potentially large data volume, thereby appropriately reducing a data volume in the global secondary index and improving practicability of the global secondary index. In addition, the first node is responsible for calculation processing of the distribution key data, so that resources occupied on the data node configured to store data can be reduced, and storage performance of the data node can be improved.

In a possible design, the creating the global secondary index based on the first target information includes: using the first target information as information included in the global secondary index; and storing, in at least one data node in a distributed manner, the information included in the global secondary index.

In the method, the first node may directly store, in the data node, the global secondary index data and received information used to create the global secondary index. Therefore, the first node mainly plays a role in information forwarding, and in a process of creating the base table, a data processing and calculation amount of the first node is low. This can avoid occupying a large quantity of resources of the first node, and reduce impact on performance of the first node.

In a possible design, at least one first attribute in the at least one attribute is used as an index key of the global secondary index, and an attribute other than the at least one first attribute in the at least one attribute and information other than the at least one attribute in the first target information are used as additional keys of the global secondary index.

In the method, a part or all of attributes in the global secondary index may be used as index keys of the global secondary index. Data filtering can be implemented based on the index key, and a good filtering effect can be obtained.

In a possible design, the first target information further includes version information, the version information indicates a version of the tuple to which the data in the at least one attribute belongs, and a version of each tuple is used to determine whether the corresponding tuple is valid.

In the method, the version information is used to determine validity of tuple data. Therefore, a valid data range can be determined based on the version information of the tuple data, to avoid processing of invalid data, and ensure correctness of data processing.

In a possible design, after the creating the global secondary index based on the first target information, the method further includes: receiving a third indication, where the third indication indicates to rebuild the global secondary index; indicating, based on the third indication, a node configured to store the global secondary index to delete the stored global secondary index, and sending a second request to the second node, where the second request is used to request to obtain second target information, the second target information includes data, in the base table, that belongs to at least one target attribute, and the at least one target attribute is at least one attribute included in the to-be-rebuilt global secondary index; and receiving the second target information from the second node, and rebuilding the global secondary index based on the second target information.

In the method, in the distributed database, when rebuilding the global secondary index, the first node may directly obtain, from the second node that stores the base table, information required for rebuilding the global secondary index, and rebuild the global secondary index based on the obtained information. This solution can be implemented based on an original architecture of the distributed database, and does not need to perform other additional optimization processing on the database architecture. Therefore, processing costs are low, and impact on performance of the database is low. In addition, after receiving the indication, the first node can quickly complete rebuilding of the global secondary index. This has low requirements on a start condition and an application scenario. The first node may rebuild the global secondary index at any time as required. Therefore, the solution has high practicability.

In a possible design, the sending, based on the first indication, a first request to the second node configured to store the base table includes: determining the base table and obtaining metadata of the base table based on the first indication; generating metadata of the global secondary index based on the first indication and the metadata of the base table; generating the first request based on the metadata of the base table and the metadata of the global secondary index; and sending the first request to the second node.

The second node includes at least one data node, and before the receiving a first indication, the method further includes: creating the base table based on the received third indication, and storing the base table in at least one data node in a distributed manner, where the third indication indicates to create the base table.

In the method, the global secondary index may be created after the base table is created, in other words, the first node may synchronously create the global secondary index of the base table after creating the base table. Therefore, high consistency between the base table data and the global secondary index data can be ensured, and availability of the global secondary index can be improved.

According to a second aspect, this application provides a method for creating a global secondary index in a distributed database, applied to a second node. The method includes: receiving a first request from a first node, where the first request is used to request to obtain first target information, the first target information is used to generate a global secondary index with at least one attribute in a base table, the first target information includes the at least one attribute in the base table, and the second node is configured to store the base table; and obtaining the first target information based on the first request, and sending the first target information to the first node, so that the first node creates the global secondary index based on the first target information.

In a possible design, the first target information further includes location information, and the location information indicates a location, in the base table, of a tuple to which data of the at least one attribute belongs.

In a possible design, the second node includes at least one data node, and the data of the at least one attribute includes first data; and location information corresponding to the first data includes first location information and second location information; or the location information corresponding to the first data includes the second location information and a target distribution key used to determine the first location information, and the target distribution key is a distribution key that is in the base table and that corresponds to a tuple to which the first data belongs. The first location information indicates a first data node in which the first data is located, and the second location information indicates a storage location of the first data in the first data node.

In a possible design, at least one first attribute in the at least one attribute is used as an index key of the global secondary index, and an attribute other than the at least one first attribute in the at least one attribute and information other than the at least one attribute in the first target information are used as additional keys of the global secondary index.

In a possible design, the first target information further includes version information, the version information indicates a version of the tuple to which the data in the at least one attribute belongs, and a version of each tuple is used to determine whether the corresponding tuple is valid.

In a possible design, after the obtaining the first target information based on the first request, and sending the first target information to the first node, the method further includes: deleting the stored global secondary index based on an indication of the first node, and receiving a second request from the first node, where the second request is used to request to obtain second target information, the second target information includes data, in the base table, that belongs to at least one target attribute, and the at least one target attribute is at least one attribute included in the to-be-rebuilt global secondary index; and obtaining the second target information based on the second request, and sending the second target information to the first node, so that the first node rebuilds the global secondary index based on the second target information.

According to a third aspect, this application provides a data processing apparatus, used in a first node. The apparatus includes: a transceiver unit, configured to receive a first indication, where the first indication indicates to create a global secondary index with at least one attribute in a base table; and a processing unit, configured to send, based on the first indication and by using the transceiver unit, a first request to a second node configured to store the base table, where the first request is used to request to obtain first target information, and the first target information includes the at least one attribute in the base table. The processing unit is further configured to: receive the first target information from the second node by using the transceiver unit, and create the global secondary index based on the first target information.

In a possible design, the first target information further includes location information, and the location information indicates a location, in the base table, of a tuple to which data of the at least one attribute belongs.

In a possible design, the second node includes at least one data node, and the data of the at least one attribute includes first data; and location information corresponding to the first data includes first location information and second location information; or the location information corresponding to the first data includes the second location information and a target distribution key used to determine the first location information, and the target distribution key is a distribution key that is in the base table and that corresponds to a tuple to which the first data belongs. The first location information indicates a first data node in which the first data is located, and the second location information indicates a storage location of the first data in the first data node.

In a possible design, when creating the global secondary index based on the first target information, the processing unit is specifically configured to: when the location information corresponding to the first data includes the second location information and the target distribution key, determine the first location information based on the target distribution key; use the first data, the first location information, and the second location information as the tuple corresponding to the first data in the global secondary index; and store, in a second data node, the tuple corresponding to the first data.

In a possible design, when creating the global secondary index based on the first target information, the processing unit is specifically configured to: use the first target information as information included in the global secondary index; and store, in at least one data node in a distributed manner, the information included in the global secondary index.

In a possible design, at least one first attribute in the at least one attribute is used as an index key of the global secondary index, and an attribute other than the at least one first attribute in the at least one attribute and information other than the at least one attribute in the first target information are used as additional keys of the global secondary index.

In a possible design, the first target information further includes version information, the version information indicates a version of the tuple to which the data in the at least one attribute belongs, and a version of each tuple is used to determine whether the corresponding tuple is valid.

In a possible design, after creating the global secondary index based on the first target information, the processing unit is further configured to: receive a second indication by using the transceiver unit, where the second indication indicates to rebuild the global secondary index; indicate, based on the second indication and by using the transceiver unit, a node configured to store the global secondary index to delete the stored global secondary index, and send a second request to the second node, where the second request is used to request to obtain second target information, the second target information includes data, in the base table, that belongs to at least one target attribute, and the at least one target attribute is at least one attribute included in the to-be-rebuilt global secondary index; and receive the second target information from the second node by using the transceiver unit, and rebuild the global secondary index based on the second target information.

In a possible design, when sending, based on the first indication, the first request to the second node configured to store the base table, the processing unit is specifically configured to: determine the base table and obtain metadata of the base table based on the first indication; generate metadata of the global secondary index based on the first indication and the metadata of the base table; generate the first request based on the metadata of the base table and the metadata of the global secondary index; and send the first request to the second node.

According to a fourth aspect, this application provides a data processing apparatus, used in a second node. The apparatus includes: a transceiver unit, configured to receive a first request from a first node, where the first request is used to request to obtain first target information, the first target information is used to generate a global secondary index with at least one attribute in a base table, the first target information includes the at least one attribute in the base table, and the second node is configured to store the base table; and a processing unit, configured to: obtain the first target information based on the first request, and send the first target information to the first node by using the transceiver unit, so that the first node creates the global secondary index based on the first target information.

In a possible design, the first target information further includes location information, and the location information indicates a location, in the base table, of a tuple to which data of the at least one attribute belongs.

In a possible design, the second node includes at least one data node, and the data of the at least one attribute includes first data; and location information corresponding to the first data includes first location information and second location information; or the location information corresponding to the first data includes the second location information and a target distribution key used to determine the first location information, and the target distribution key is a distribution key that is in the base table and that corresponds to a tuple to which the first data belongs. The first location information indicates a first data node in which the first data is located, and the second location information indicates a storage location of the first data in the first data node.

In a possible design, at least one first attribute in the at least one attribute is used as an index key of the global secondary index, and an attribute other than the at least one first attribute in the at least one attribute and information other than the at least one attribute in the first target information are used as additional keys of the global secondary index.

In a possible design, the first target information further includes version information, the version information indicates a version of the tuple to which the data in the at least one attribute belongs, and a version of each tuple is used to determine whether the corresponding tuple is valid.

In a possible design, after obtaining the first target information based on the first request, and sending the first target information to the first node by using the transceiver unit, the processing unit is further configured to: delete the stored global secondary index based on an indication of the first node, and receive a second request from the first node by using the transceiver unit, where the second request is used to request to obtain second target information, the second target information includes data, in the base table, that belongs to at least one target attribute, and the at least one target attribute is at least one attribute included in the to-be-rebuilt global secondary index; and obtain the second target information based on the second request, and send the second target information to the first node by using the transceiver unit, so that the first node rebuilds the global secondary index based on the second target information.

According to a fifth aspect, this application provides a data processing apparatus. The apparatus includes a memory and at least one processor. The memory is configured to store a computer program. The processor is configured to execute the computer program stored in the memory, to implement the method according to any one of the first aspect or the possible designs of the first aspect, or implement the method according to any one of the second aspect or the possible designs of the second aspect.

According to a sixth aspect, this application provides a distributed database system. The system includes a first node and a second node. The first node is configured to implement the method according to any one of the first aspect or the possible designs of the first aspect, and the second node is configured to implement the method according to any one of the second aspect or the possible designs of the second aspect.

According to a seventh aspect, this application provides a computer storage medium. The computer storage medium stores a computer-readable program. When the computer-readable program is run on a computer, the computer is enabled to perform the method according to any one of the first aspect or the possible designs of the first aspect, or the computer is enabled to perform the method according to any one of the second aspect or the possible designs of the second aspect.

According to an eighth aspect, this application provides a computer program product. When the computer program product runs on a computer, the computer is enabled to perform the method described in the first aspect or any possible design of the first aspect or the method described in the second aspect or any possible design of the second aspect.

According to a ninth aspect, an embodiment of this application provides a chip. The chip is configured to read a computer program stored in a memory, to perform the method according to any one of the first aspect or the possible designs of the first aspect, or perform the method according to any one of the second aspect or the possible designs of the second aspect.

According to a tenth aspect, an embodiment of this application provides a chip system. The chip system includes a processor, configured to support a computer apparatus in implementing the method according to any one of the first aspect or the possible designs of the first aspect, or implementing the method according to any one of the second aspect or the possible designs of the second aspect.

In a possible design, the chip system further includes a memory, and the memory is configured to store a program and data that are necessary for the computer apparatus.

In a possible design, the chip system includes a chip, or includes a chip and another discrete component.

For beneficial effects of the second aspect to the tenth aspect, refer to descriptions of the beneficial effects of the first aspect. Details are not described herein again.

### BRIEF DESCRIPTION OF DRAWINGS

FIG. 1a is a diagram of an architecture of a distributed database system;
FIG. 1b is a diagram of a procedure of creating a global secondary index;
FIG. 2a is a diagram of an architecture of a distributed database system;
FIG. 2b is a diagram of a procedure of creating a global secondary index;
FIG. 3a is a diagram of an architecture of a distributed database system according to an embodiment of this application;
FIG. 3b is a diagram of an architecture of a distributed database system according to an embodiment of this application;
FIG. 4 is a diagram of a method for creating a global secondary index in a distributed database according to an embodiment of this application;
FIG. 5 is a diagram of data distribution in a distributed database according to an embodiment of this application;
FIG. 6 is a diagram of data distribution in a distributed database according to an embodiment of this application;
FIG. 7 is a schematic flowchart of a method for creating a global secondary index in a distributed database according to an embodiment of this application;
FIG. 8 is a schematic flowchart of a method for rebuilding a global secondary index in a distributed database according to an embodiment of this application;
FIG. 9 is a diagram of a method for creating a global secondary index in a distributed database according to an embodiment of this application;
FIG. 10 is a diagram of a data processing apparatus according to an embodiment of this application; and
FIG. 11 is a diagram of a structure of a data processing apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings. The terms "first" and "second" below in descriptions about embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, descriptions of concepts related to this application are provided as examples for reference.
(1) A distributed database is a logically unified database formed by connecting a plurality of physically dispersed database units through a computer network. Each connected database unit may be referred to as a site, a node, a data node (data node, DN), or the like. Distributed storage is a data storage technology, and is a technology for storing data in a plurality of independent data units in a distributed manner.
(2) A key-value database (key-value database), or referred to as key-value storage, is a data storage paradigm used to store, retrieve, and manage an associative array. The associative array is a data structure that is referred to as a dictionary or a hash table in most cases. The dictionary includes a collection of objects or records, the records include a plurality of different fields (or referred to as fields), and each field includes data. The key-value database may store data as a key-value pair set. A key is used as a unique identifier and may be used to identify the data. The key may also be referred to as a field, an attribute, or the like.
(3) A base table (base table), namely, a table, is an object used to store data in a database, and is a set of structured data. The base table may be defined as a set of at least one attribute (or referred to as a column/key). One attribute is one column of data in the base table. Therefore, the base table may also be understood as a set of at least one column of data.
(4) Sharding (sharding) is a method for distributing loads through scale-out in a distributed database. An object may be a base table, a materialized view, a global secondary index, or the like. For example, a shard of a base table may include at least one row of data in the base table.
(5) A primary key (primary key) is a combination of one or more columns of data in a base table, and a value of the primary key can uniquely identify each row in the base table. Such one or more columns of data are referred to as the primary key of the base table, and entity integrity of the base table may be enforced by using the primary key. When the base table is created or modified, the primary key may be created by defining a primary key constraint. One base table can have only one primary key constraint, and column data in the primary key constraint cannot be null.
(6) A distribution key (distribution key) is a combination of one or more columns of data used to determine a database unit that stores a specific data row in a distributed database. A database unit in which a data row in a base table is stored can be determined based on the distribution key.
(7) A global secondary index (global secondary index, GSI), also referred to as a global index, is a type of index. The index is a data structure for sorting in a database system, and is used to assist in quickly querying and updating data in a base table of the database. The global secondary index is a global index that takes effect on a data node in the distributed database. An index key (index key) is a column (or a combination of a plurality of columns) that identifies an index item in the global secondary index.
(8) A coordinator node (coordinator node, CN) is a node that performs data scheduling. The coordinator node may manage a data node that establishes a communication connection to the coordinator node, and perform data scheduling between data nodes.

A data node is a node configured to process and store data. The data node may be a node that receives data scheduling information of the coordinator node, and receives and sends data or performs data processing and storage based on the received data scheduling information.

A device form of the coordinator node or the data node provided in embodiments of this application may be an electronic device, or may be a functional module or unit disposed in the electronic device, or may be a chip, an integrated circuit, a component, or the like deployed in the electronic device.

For example, the electronic device may be a terminal device, and the terminal device may also be referred to as user equipment (user equipment, UE), a mobile terminal (mobile terminal, MT), or the like. The terminal device includes but is not limited to a mobile phone (Mobile Phone), a tablet computer, a notebook computer, a palmtop computer, a mobile internet device (Mobile Internet Device, MID), a wearable device (for example, a smartwatch or a smart band), a vehicle, a vehicle-mounted device (for example, the vehicle-mounted device on an automobile, an electric vehicle, an airplane, a ship, a train, or a high-speed railway), a virtual reality (Virtual Reality, VR) device, an augmented reality (Augmented Reality, AR) device, or a wireless terminal in industrial control (Industrial Control), a smart home device (for example, a refrigerator, a television, an air conditioner, or an electricity meter), an intelligent robot, a workshop device, a wireless terminal in self driving (Self Driving), a wireless terminal in remote medical surgery (Remote Medical Surgery), a wireless terminal in a smart grid (Smart Grid), a wireless terminal in transportation safety (Transportation Safety), a wireless terminal in a smart city (Smart City), a wireless terminal in a smart home (Smart Home), or a flight device (for example, an intelligent robot, a hot air balloon, an unmanned aerial vehicle, or an aircraft). For example, the terminal device in embodiments of this application includes but is not limited to iOS^{®}, Android^{®}, Microsoft^{®}, or another operating system.

It should be understood that in embodiments of this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b and c, where a, b, and c may be singular or plural.

When there is a base table in the distributed database, regardless of whether the base table has data, a user can create a global secondary index for one or more columns in the table based on a requirement. In this case, a distribution manner of the base table or the global secondary index may be hash (hash) distribution, list (list) distribution, range (range) distribution, or the like. The user can alternatively rebuild an existing global secondary index according to an instruction. A rebuilding instruction may be an index rebuilding (reindex) instruction, and all global secondary indexes of the base table may also be rebuilt by modifying an attribute of the base table.

Creating/rebuilding of the global secondary index is greatly different from creating/rebuilding of a conventional index in terms of logic, and a process of creating/rebuilding the global secondary index is usually accompanied by a large amount of data exchange across data nodes. As a result, time costs and a data consistency risk of creating/rebuilding the global secondary index are extremely high. To solve these problems, a common practice is to construct or rebuild a base table and a global secondary index of the base table synchronously or asynchronously based on a storage structure of a database.

The creation process is used as an example. If the base table and the global secondary index are synchronously created, a database I/O increases in a short period of time. This is a challenge to overall performance of the database. Currently, although an architecture of the database can be optimized to different degrees, scalability is reduced and maintenance costs increase accordingly.

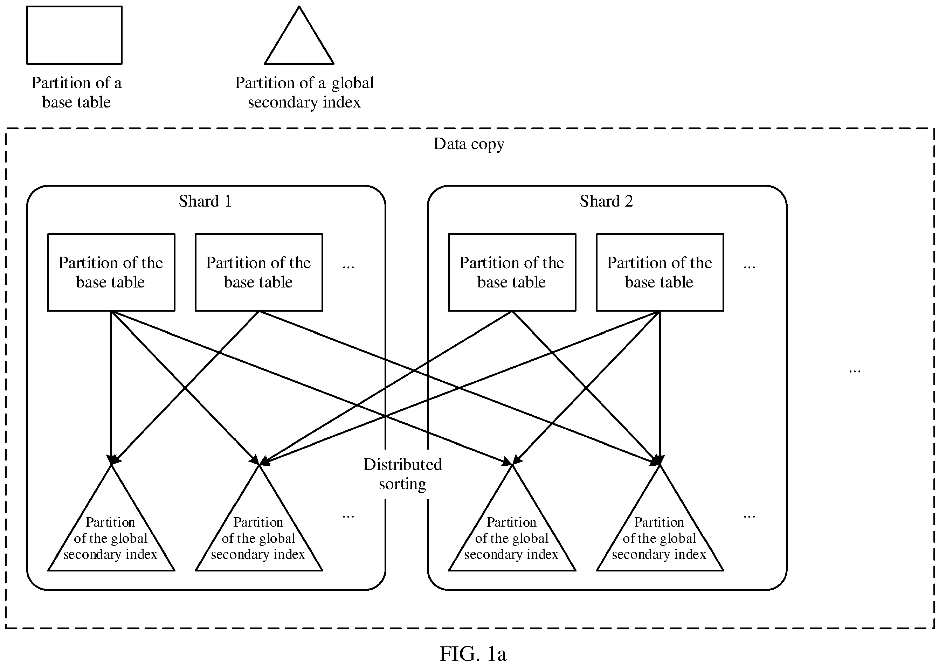

Refer to FIG. 1a. An architecture of a current distributed database system may be an architecture based on a log structured merge (log structured merge, LSM) tree (tree). A distributed database based on the architecture has one or more copies, and each copy has a plurality of data shards. A part or all of data of a base table and data of a global secondary index is stored on each data shard. Each data shard may have one or more partitions of the base table and partitions of the global secondary index. Each partition of the base table includes a part of data in the base table, and each partition of the global secondary index includes a part of data in the global secondary index.

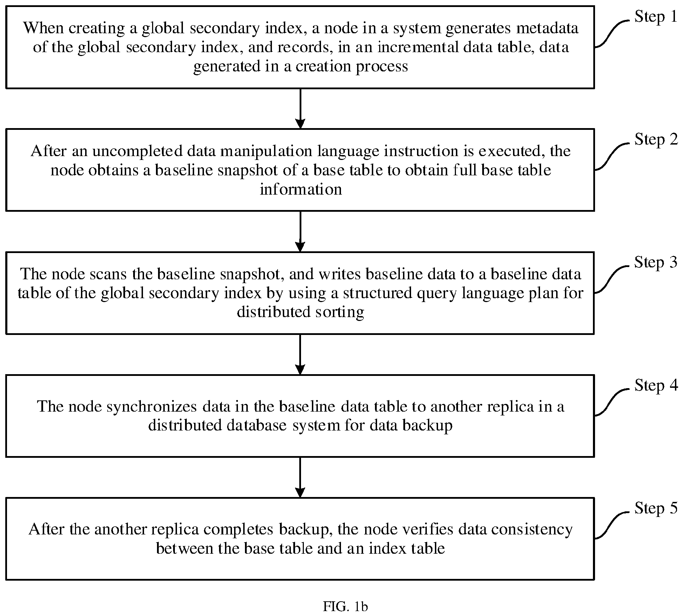

As shown in FIG. 1b, a procedure of creating a global secondary index in the system may include the following step 1 to step 5.

Step 1: When creating the global secondary index, a node in the system generates metadata of the global secondary index, and records, in an incremental data table, data generated in a creation process.

Limited by a storage structure of the LSM tree, the metadata of the global secondary index needs to include a primary key of the base table.

Step 2: After an uncompleted data manipulation language (data manipulation language, DML) instruction is executed, the node obtains a baseline snapshot of a base table to obtain full base table information.

Step 3: The node scans the baseline snapshot, and writes baseline data to a baseline data table of the global secondary index by using a structured query language (structured query language, SQL) plan for distributed sorting.

In this step, data of the global secondary index is constructed by using the SQL plan for distributed sorting. A plan structure in the database is complex, and additional overheads are generated if expansion is performed on the basis of an original plan.

Step 4: The node synchronizes data in the baseline data table to another replica in a distributed database system for data backup.

Step 5: After the another replica completes backup, the node verifies data consistency between the base table and an index table.

For a global secondary index with a unique constraint, it is further required to verify whether an attribute in the index table is unique.

According to the foregoing method, high data consistency between the global secondary index and the base table can be ensured. However, the overall solution depends on the underlying storage architecture of the LSM tree, and scalability is poor. In addition, in the foregoing method, both the incremental data table and the baseline data table of the global secondary index need to be sorted based on the primary key of the base table. However, overheads of the distributed sorting plan are high, and costs of maintaining a plurality of incremental data tables and baseline data tables are also high. Consequently, processing pressure of the distributed database is high in an overall construction process, and it may be difficult to ensure performance of the distributed database. In the foregoing method, data is verified at the last stage of the creation process. Therefore, when data is inconsistent or does not comply with the unique constraint in the creation process, the creation process cannot exit in time.

The creation process is used as an example. A process of asynchronously creating a base table and a global secondary index of the base table can be dynamically optimized based on a database load more conveniently, but may deteriorate availability of the global secondary index. If a service load is heavy in the creation process, time costs for creating increase. In addition, asynchronously creating the base table and the global secondary index of the base table also increases data inconsistency between the global secondary index and the base table, and affects accuracy of the global secondary index.

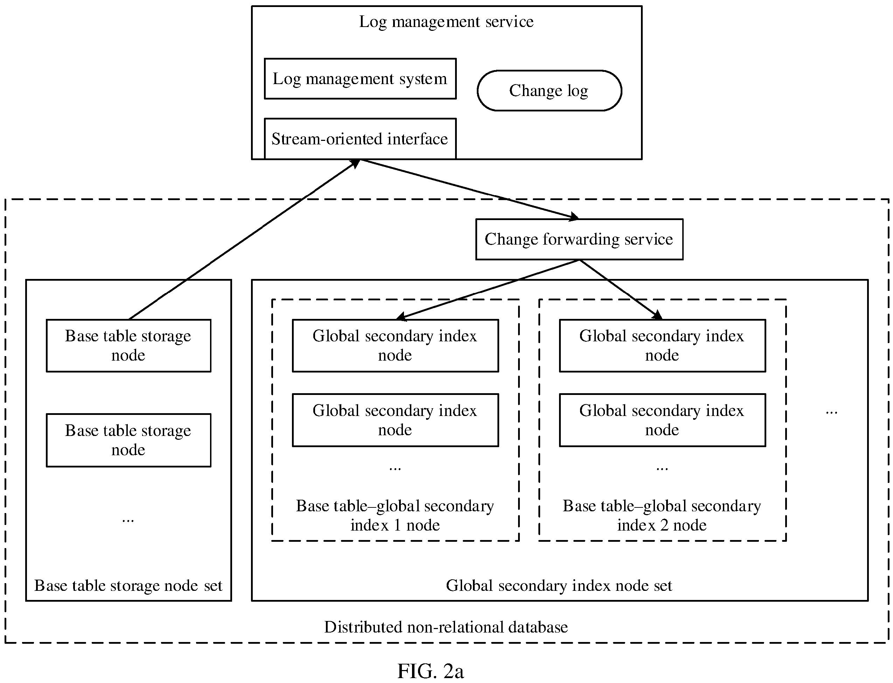

Refer to FIG. 2a. Another current distributed database system may include a log management service (log-structured journal service), a distributed non-relational database, and a change forwarding service (change record propagators). The log management service includes a log management system (journal manager), a change log, and a stream-oriented interface (Stream-Oriented API). The log management system is configured to manage the change log (journal), the change log includes a base table change record, and the stream-oriented interface is configured to submit change records to the change forwarding service. The distributed non-relational database includes a base table storage node (Base table storage node, BTSN) set (set) and a global secondary index node set. The base table storage node set is a set of base table storage nodes, and the base table storage node is a node that stores data of the base table. The global secondary index node set is a set of global secondary index nodes, and the global secondary index node is a node that stores data of the global secondary index. A base table-global secondary index node is a logical set separated by global secondary indexes in the base table. The change forwarding service is configured to send the change log to the base table-global secondary index node.

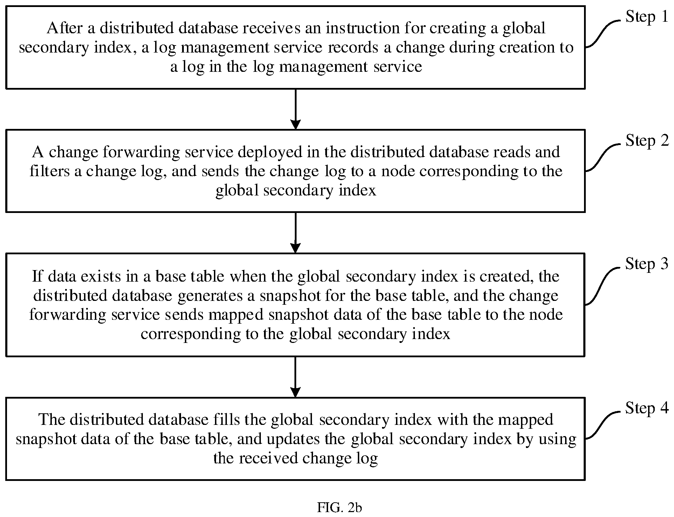

As shown in FIG. 2b, a procedure of creating a global secondary index in the system may include the following step 1 to step 4.

Step 1: After the distributed database receives an instruction for creating a global secondary index, the log management service records a change during creation to a log in the log management service.

Step 2: The change forwarding service deployed in the distributed database reads and filters the change log, and sends the change log to a node corresponding to the global secondary index.

Step 3: If data exists in the base table when the global secondary index is created, the distributed database generates a snapshot for the base table, and the change forwarding service sends mapped snapshot data of the base table to the node corresponding to the global secondary index.

In this step, if data exists in the base table, a latest snapshot is generated for the base table, and the data in the snapshot is forwarded, through mapping, to the node corresponding to the global secondary index. Similarly, the change forwarding service maps the previously recorded change log, and forwards the change log to the node corresponding to the global secondary index. A snapshot is a read-only static view that records data information in the database at a specific time point.

A data processing operation in this step is completed by the independently deployed change forwarding service, and the entire process is asynchronous with the process of creating the base table. Therefore, it is difficult to ensure high data consistency between the global secondary index and the base table.

Step 4: The distributed database fills the global secondary index with the mapped snapshot data of the base table, and updates the global secondary index by using the received change log.

In this step, the node (GSIN) in which the global secondary index is located locally creates the global secondary index by using data sent by the change forwarding service. After the global secondary index is filled with the baseline data and is updated by using the change log, data of the global secondary index may be finally consistent with data of the base table.

The foregoing method depends on the independently deployed log management service that interacts with the database through an API. This deployment manner has poor scalability. When transmission data is modified, not only a service or a module in the database needs to be maintained, but also the API in the log management service needs to be maintained. Consequently, an operation performed on the data is not flexible enough. In addition, in the foregoing method, the change forwarding service works asynchronously. As a result, the base table and the global secondary index cannot be synchronized in real time. For services related to long time and dense DML operations, an availability status of the global secondary index needs to be frequently changed to prevent a user from finding incorrect information (information inconsistent with that in the base table). Finally, as a result, a valid time window of the global secondary index is reduced, and availability of the global secondary index deteriorates.

In view of the foregoing problem, embodiments of this application provide a method and an apparatus for creating a global secondary index in a distributed database, to create a global secondary index with high availability while ensuring performance and costs of the distributed database. In this solution, in the distributed database, the global secondary index can be created on the created base table, and the global secondary index can be rebuilt. In an entire creation process, performance and scalability of the distributed database can be balanced, and high data consistency between the global secondary index and the base table can be maintained.

The solution provided in embodiments of this application may be applied to a scenario in which the global secondary index of the base table is created or rebuilt for the base table in the distributed database.

In embodiments of this application, the base table includes at least one column of data, and the at least one column of data may be divided into at least one row of data. In other words, the base table includes at least one row of data × at least one column of data. In some embodiments of this application, data in a same column in the base table belongs to a same attribute, data in a same row in the base table belongs to a same tuple, and may be stored in a same storage location. The at least one column of data in the base table is a distribution key of the base table, and the distribution key of the base table is used to determine a storage location of the data in the base table. Optionally, the base table may further include at least one column of data used as a primary key. The distribution key and the primary key of the base table may be the same or different. The distribution key and the primary key of the base table may be data in a specified column in the base table, or may be data determined based on a user indication.

In embodiments of this application, the global secondary index of the base table includes data in some columns in the base table and location information corresponding to the data in the base table, the data in the some columns may be selected by a user from column data in the base table and is set, and the location information corresponding to the data indicates a location of the corresponding data in the base table. Optionally, the global secondary index of the base table may further include version information (or referred to as transaction information) corresponding to the data in the base table, and the version information corresponding to the data is used to determine whether the corresponding data is valid. In some embodiments of this application, data in a same column in the global secondary index belongs to a same attribute, and data in a same row in the global secondary index belongs to a same tuple, and may be stored in a same location.

In some embodiments of this application, at least one column of data in the global secondary index may be a distribution key of the global secondary index, and the distribution key of the global secondary index is used to determine a storage location of the data in the global secondary index. In some embodiments of this application, the global secondary index may include an index key, an additional key (which may also be referred to as an additional column/a hidden column/a covered column/an included column), and the like. The index key is at least one column of data in the global secondary index, and may be used to query specific data, to increase a query speed. The hidden column includes at least one column of data that is in the global secondary index and that is invisible to the user, and when the user indicates to display the global secondary index, data in the global secondary index displayed to the user does not include data in the hidden column of the global secondary index. The distribution key and the index key of the global secondary index may be the same or different. The distribution key and the index key of the global secondary index may be data in a specified column, or may be data determined based on a user indication.

In the solution provided in embodiments of this application, after creating the base table, a user may synchronously create the global secondary index of the base table, and may rebuild the created global secondary index in a subsequent process. The user may perform an insert, update, delete (insert, update, delete, IUD) operation on the data in the base table, to update the base table, and may correspondingly update the global secondary index of the base table synchronously, to ensure high consistency between base table data and global secondary index data.

The solution provided in embodiments of this application may be applied to a distributed database system including at least one coordinator node and at least one data node. In the distributed database system, the data node is configured to store the base table data and/or the global secondary index data, and the coordinator node is configured to perform data calculation processing, scheduling processing, and the like on the base table data and the global secondary index data that are stored in the data node.

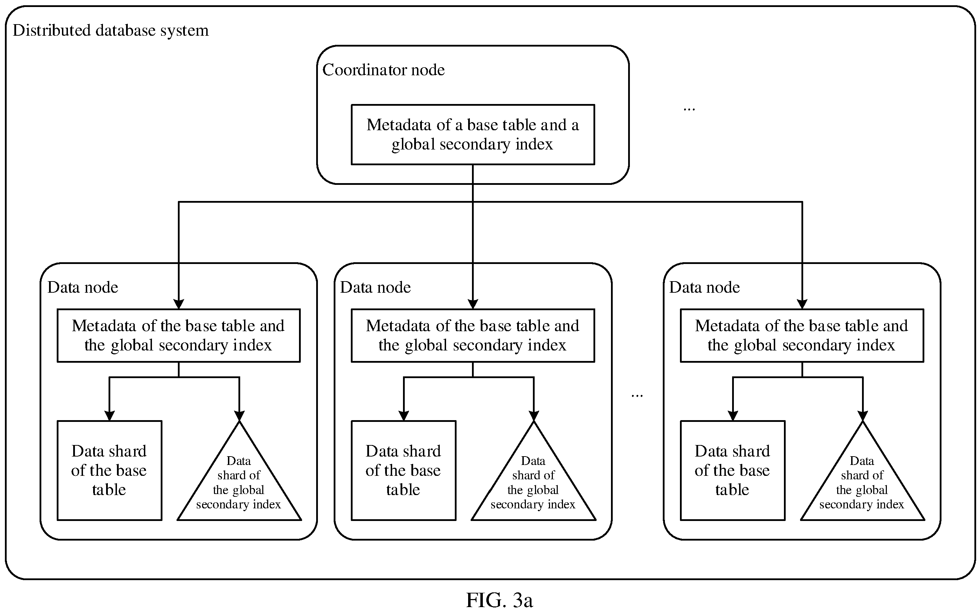

For example, as shown in FIG. 3a, the distributed database system includes at least one coordinator node, and each coordinator node corresponds to at least one data node. Each node (a coordinator node or a data node) in the distributed database system may include one or more pieces of metadata of the base table and one or more pieces of metadata of the global secondary index. The metadata includes but is not limited to description information of a database object, for example, a type, an attribute, or a name. The metadata included in the data node is a subset of the metadata included in the coordinator node, and each piece of metadata of the base table in the node may correspond to one or more pieces of metadata of the global secondary index. Each piece of metadata in the data node corresponds to at least one piece of data in the data node. Data included in the base table and data included in the global secondary index may be stored in at least one data node in a distributed manner, and a distribution manner of the data may be hash distribution, list distribution, range distribution, or the like.

In some embodiments of this application, distributed storage of the base table and distributed storage of the global secondary index are independent of each other. The coordinator node may store the base table data in the at least one data node in a distributed manner based on a distribution manner corresponding to the base table. The coordinator node may store the global secondary index data in the at least one data node in a distributed manner based on a distribution manner corresponding to the global secondary index. A same data node may store only the base table data or the global secondary index data, or may store both the base table data and the global secondary index data.

For example, the coordinator node may store the base table data in the plurality of data nodes in a distributed manner based on the distribution key of the base table according to a distribution algorithm. For the global secondary index of the base table, the coordinator node may store the global secondary index data in the plurality of data nodes based on the distribution key of the global secondary index according to a distribution algorithm in a distribution manner that is the same as or different from that of the base table.

In a possible application scenario, the coordinator node may create the base table based on a user indication. After creating the base table, the coordinator node may create a global secondary index of the base table based on a user indication, and store data of the global secondary index of the base table in a distributed manner in the at least one data node. If data exists in the base table, the base table data needs to be synchronized to the global secondary index. In another possible application scenario, after creating a global secondary index of a base table based on a user indication, the coordinator node may rebuild the global secondary index of the base table based on a user indication or a scenario requirement. If data exists in the base table, the base table data needs to be synchronized to the global secondary index.

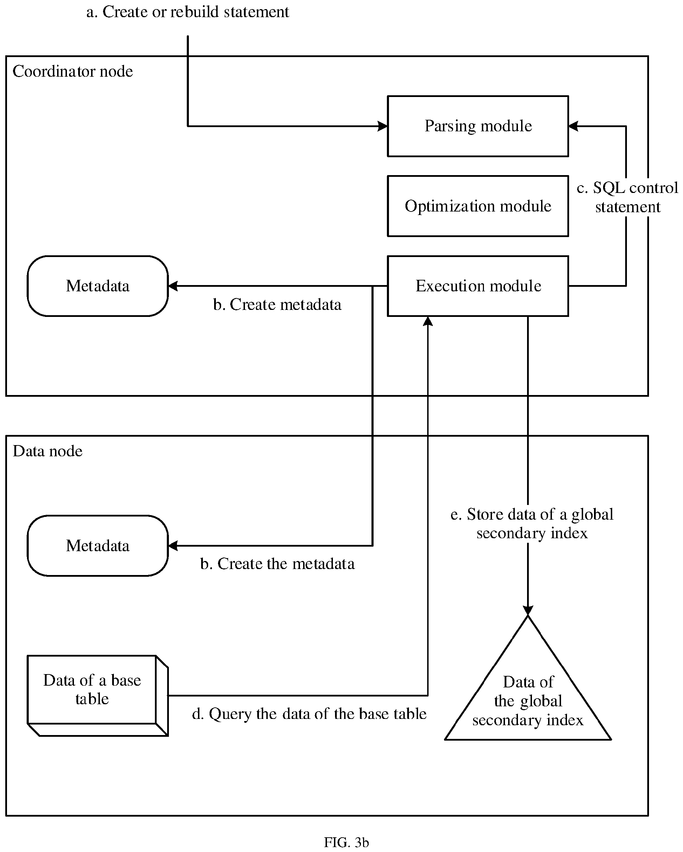

For example, as shown in FIG. 3b, the coordinator node may include a parsing module, an optimization module, and an execution module. As shown in a process a in FIG. 3b, a user may enter, on the coordinator node, a create/rebuild (create/rebuild) statement indicating to create/rebuild a global secondary index, to trigger a global secondary index creating/rebuilding procedure. After the user enters the create/rebuild statement, the parsing module and the optimization module in the coordinator node separately parse and optimize the create/rebuild statement, and convert the create/rebuild statement into a data structure that can be identified by the execution module. The execution module may generate/update metadata of the global secondary index based on content like a base table name and a global secondary index name, and indicate the data node to generate/update the metadata of the global secondary index, as shown in a process b in FIG. 3b. As shown in a process c in FIG. 3b, after generating/updating the metadata of the global secondary index, the execution module may generate, based on the metadata of the global secondary index, an indication used to control creating/rebuilding of the global secondary index, for example, an SQL control statement. The parsing module and the optimization module may parse and optimize the indication, and then send the indication to the execution module. As shown in a process d in FIG. 3b, the execution module may obtain, by querying the data node based on the indication, data required for creating/rebuilding the global secondary index. Then, the obtained data is stored in the data node as the data in the global secondary index, to implement creating/rebuilding of the global secondary index, as shown in a process e in FIG. 3b.

For example, the function of the parsing module may be implemented by a parser deployed in the coordinator node, the function of the optimization module may be implemented by an optimizer deployed in the coordinator node, and the function of the execution module may be implemented by an executor deployed in the data node. Certainly, the functions of the foregoing modules may alternatively be implemented by using another hardware apparatus. This is not specifically limited in embodiments of this application.

For example, execution logic of the coordinator node or the data node may be deployed on the coordinator node and the data node in the distributed database in a form of program code.

In embodiments of this application, the data nodes store different data, but have architectures that are the same, and support various different data distribution manners. The coordinator node may be selected according to an election algorithm, or may have an architecture different from that of the data node. Based on a specific deployment status of the distributed database system, there may be a plurality of coordinator nodes. The modules of the database may be equally deployed on the coordinator node and the data nodes, and a role of a node in the distributed database system is set by using a configuration file.

It should be understood that the system architecture shown in FIG. 3a or FIG. 3b is merely an example for describing a system architecture to which the solutions of this application are applicable, and does not constitute a limitation on the system architecture to which the solutions of this application are applicable.

The following describes the solutions provided in embodiments of this application with reference to specific embodiments.

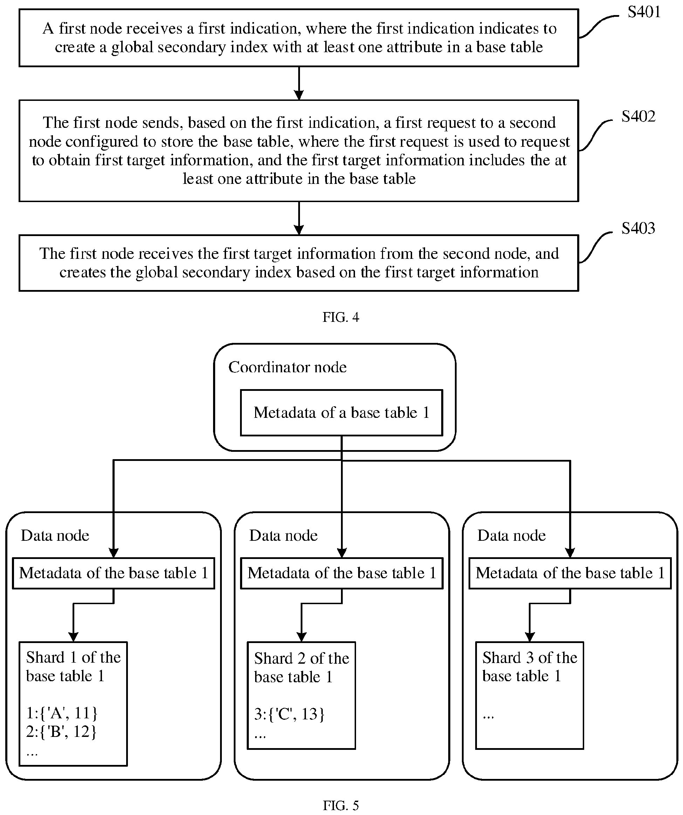

Refer to FIG. 4. A method for creating a global secondary index in a distributed database according to an embodiment of this application may include the following steps.

S401: A first node receives a first indication, where the first indication indicates to create a global secondary index with at least one attribute in a base table.

In some embodiments of this application, this step may be performed after the base table is created, or may be performed in a scenario in which the base table has been created. Optionally, before the first node receives the first indication, the first node may create the base table based on a received indication, and store the base table in a second node in a distributed manner. The indication indicates to create the base table, the second node may include at least one data node, and that the first node stores the base table in a second node in a distributed manner may be specifically: The first node stores the base table in at least one data node in a distributed manner.

For example, the first node may be the coordinator node in the distributed database in the foregoing embodiment, and the data node may be the data node in the distributed database in the foregoing embodiment.

In some embodiments of this application, the base table created by the first node may include at least one attribute (at least one column of data), where each attribute is a column of data in the base table, and data (namely, the at least one attribute/the at least one column of data) in the base table may be stored in the at least one data node in the second node in a distributed manner based on a row distribution status (that is, based on a tuple). Data in a same row in the base table may be stored in a same data node, and each of the at least one data node stores at least one row of data in the base table.

The following describes the base table with reference to specific examples.

### Example 1: Base table that does not include a primary key

For example, data in the base table is enrollment data in an enrollment system of a school. A name of the base table may be base table 1 (table1), and the base table may include data shown in Table 1 below.

**Table 1 Data in the base table 1**

| Student ID (studentid) | Student name (name) | Class ID (classid) |
|---|---|---|
| 1 | A | 11 |
| 2 | B | 12 |
| 3 | C | 13 |
| ... | ... | ... |

The base table 1 shown in Table 1 may include three columns × n rows of data (n is a positive integer). The three columns of data respectively belong to three attributes: a student ID, a student name, and a class ID, each row of data corresponds to enrollment information of a student. In this case, when the base table is the base table 1, the at least one attribute included in the base table is the three attributes: the student ID, the student name, and the class ID shown in Table 1.

Table definition information (or table attribute information) of the base table 1 shown in Table 1 is shown in Table 2 below.

**Table 2 Definition information of the base table 1**

| Table name | Base table 1 (table1) | | |
|---|---|---|---|
| Attribute column # | Column name | Data type | Remark |
| 1 | studentid | Integer (integer) | Student ID, distribution key |
| 2 | name | Variable-length character (varchar(50)) | Student name |
| 3 | classid | Integer/integral number (integer) | Class ID |
| Distribution key | hash (studentid) | | |

It may be determined based on the foregoing Table 2 that a name of the base table is base table 1, and the base table includes three attributes, specifically, three columns of data: a student ID, a student name, and a class ID. The student ID is an auto-increment and unique attribute, and is the distribution key of the base table 1, and data in the base table 1 is distributed and stored in a plurality of data nodes in a hash distribution manner. The base table 1 does not include the primary key. Data in the attribute the student ID is integer type data, data in the attribute the student name is variable-length character type data, and data in the attribute the class ID is integer/integral data. The information indicated in Table 2 may be stored in the first node and the second node as metadata of the base table 1. Certainly, the metadata of the base table 1 is not limited to including the information indicated in Table 2, and may alternatively include more or less information than that in Table 2.

For example, the first node is a coordinator node in the distributed database system, and the second node is at least one data node in the distributed database system. A distributed storage status of the base table 1 in the distributed database system is shown in FIG. 5. Metadata of the base table 1 is stored in both the coordinator node and each data node, and the data included in the base table 1 may be separately stored in a plurality of data nodes by shard. For example, the data in the base table 1 may be divided into three shards. A shard 1 includes data in a first row (1:{'A', 11}) and data in a second row (2: {'B', 12}) in the base table 1, and the data included in the shard 1 may be stored in one data node. A shard 2 includes data in a third row (3:{'C', 13}) in the base table 1, and the data included in the shard 2 may be stored in one data node. A shard 3 may include other data in the base table 1, and the data may be stored in one data node.

It should be noted that the foregoing example is merely an example for describing a scenario and an implementation to which the method provided in embodiments of this application is applicable, and does not constitute a limitation on an application scenario and an implementation of the method provided in embodiments of this application.

### Example 2: Base table that includes a primary key

For example, data in the base table is enrollment data in an enrollment system of a school. A name of the base table may be base table 2 (table2), and the base table may include data shown in Table 3 below.

**Table 3 Data in the base table 2**

| Student ID (studentid) | Enrollment document ID (docid) | Student name (name) | Class ID (classid) |
|---|---|---|---|
| 1 | D100101 | A | 11 |
| 2 | D100132 | B | 12 |
| 3 | D100177 | C | 13 |
| ... | ... | ... | ... |

The base table 2 shown in Table 3 may include four columns × n rows of data (n is a positive integer). The four columns of data respectively belong to four attributes: a student ID, an enrollment document ID, a student name, and a class ID, each row of data corresponds to enrollment information of a student. In this case, when the base table is the base table 2, the at least one attribute included in the base table is the four attributes: the student ID, the enrollment document ID, the student name, and the class ID shown in Table 3.

Table definition information (or table attribute information) of the base table 2 shown in Table 3 is shown in Table 4 below.

**Table 4 Definition information of the base table 2**

| Table name | Base table 2 (table2) | | |
|---|---|---|---|
| Attribute column # | Column name | Data type | Remark |
| 1 | studentid | Integer (integer) | Student ID, distribution key, primary key column 1 |
| 2 | docid | Character (char(10)) | Enrollment document ID, primary key column 2 |
| 3 | name | Variable-length character (varchar(50)) | Student name |
| 4 | classid | Integer/integral number (integer) | Class ID |
| Distribution key | hash (studentid) | | |
| Primary key | (studentid, docid) | | |

It may be determined based on the foregoing Table 4 that a name of the base table is base table 2, and the base table includes four attributes, specifically, four columns of data: the student ID, the enrollment document ID, the student name, and the class ID. The two attributes the student ID and the enrollment document ID are primary keys of the base table 2. The attribute the student ID is a distribution key of the base table 2, and data in the base table 2 is distributed and stored in a plurality of data nodes in a hash distribution manner. Data in the attribute the student ID is integer type data, data in the attribute the enrollment document ID is character type data, data in the attribute the student name is variable-length character type data, and data in the attribute the class ID is integer/integral data. The information indicated in Table 4 may be stored in the first node and the second node as metadata of the base table 2. Certainly, the metadata of the base table 2 is not limited to including the information indicated in Table 4, and may alternatively include more or less information than that in Table 4.

For a distributed storage status of the base table 2 in the distributed database, refer to the distribution status shown in FIG. 5. Details are not described herein again.

In some embodiments of this application, the base table may have at least one global secondary index, and each global secondary index may include a part of attributes in the base table. Data in the global secondary index may be stored in at least one data node in a distributed manner based on a row distribution status. Data in a same row in the global secondary index belongs to a same tuple, and may be stored in a same node. Each of the at least one data node stores at least one row of data (namely, at least one tuple) in the global secondary index. Optionally, the at least one data node may be the same as or different from at least one data node included in the second node, or there may be some same nodes in the at least one data node and the at least one data node included in the second node.

In some embodiments of this application, the global secondary index of the base table further includes location information, and the location information indicates a location, in the base table, of data that corresponds, in the base table, to the data in the global secondary index. Specifically, the location information indicates a location, in the base table, of a tuple to which data of at least one attribute belongs, and the at least one attribute is an attribute that is included in the global secondary index and that belongs to the base table.

In an optional implementation, location information corresponding to each piece of data may include first location information and second location information. The first location information indicates a node in which the data is located, and the second location information indicates a storage location of the data in the node, namely, a storage location of the data in the node in which the data is located. Based on this, the global secondary index may include at least one piece of location information, the at least one piece of location information may be used as an attribute in the global secondary index, each piece of location information corresponds to one tuple in the base table, and each piece of location information indicates a location of the corresponding tuple in the base table.

For example, the second node may include at least one data node, and the data of the at least one attribute in the global secondary index includes first data. Location information corresponding to the first data includes first location information and second location information. The first location information indicates a first data node in which the first data is located, and the second location information indicates a storage location of the first data in the first data node.

The first location information may be determined based on a distribution key of the base table. Specifically, the first location information corresponding to the data in the base table may be a result obtained by calculating, according to a distribution algorithm corresponding to a distribution manner of the base table, data that is in the data and that belongs to the distribution key of the base table. For example, if the data in the base table is distributed and stored in the plurality of data nodes in the hash distribution manner, the first location information corresponding to the data in the base table is a result obtained by performing, according to a hash algorithm, an operation on the data that is in the data and that belongs to the distribution key of the base table.

In another optional implementation, the location information corresponding to each piece of data may include the second location information and a target distribution key used to determine the first location information. The target distribution key is a distribution key that is in the base table and that corresponds to a tuple to which the data belongs, namely, data that is included in the tuple to which the data belongs and that belongs to the distribution key of the base table, the first location information indicates a node in which the data is located, and the second location information indicates a storage location of the data in the node, namely, a storage location of the data in the node in which the data is located.

For example, the second node may include the at least one data node, and the data of the at least one attribute in the global secondary index includes the first data. The location information corresponding to the first data includes the second location information and a target distribution key used to determine the first location information, and the target distribution key is a distribution key that is in the base table and that corresponds to a tuple to which the first data belongs. The first location information indicates a first data node in which the first data is located, and the second location information indicates a storage location of the first data in the first data node.

In some embodiments of this application, the global secondary index of the base table further includes version information, and the version information indicates a version of data that corresponds, in the base table, to the data in the global secondary index. Specifically, the version information indicates a version of a tuple to which data of at least one attribute belongs, a version of each tuple is used to determine whether the corresponding tuple is valid, and the at least one attribute is an attribute that is included in the global secondary index and that belongs to the base table. Based on this, the global secondary index may include at least one piece of version information, the at least one piece of version information may be used as an attribute in the global secondary index, each piece of version information corresponds to one tuple in the base table, and each piece of version information indicates whether the corresponding tuple is valid, to determine valid data included in the base table, and obtain, from the valid data, data that needs to be queried.

Optionally, the location information and the version information that are included in the global secondary index may be used as data of an additional key in the global secondary index.

In some embodiments of this application, the first node may trigger creation of the global secondary index of the base table based on a user indication. The global secondary index created by the first node may include information like the at least one attribute, the location information, and the version information in the base table.

For example, when the base table created by the first node is the base table 1 in the scenario described in Example 1 or the base table 2 in the scenario described in Example 2, the first indication may be an indication indicating to create a global secondary index class_gsi, where a name of the global secondary index is required to be class_gsi, the global secondary index class_gsi includes two attributes: a class ID and a student name in the base table, and the attribute the class ID is the index key and the distribution key of class_gsi. Data in class_gsi is stored in a plurality of nodes in a distributed manner based on the hash distribution manner. For example, when the base table is the base table 1 in the scenario described in Example 1, the first indication may be the following SQL statement entered by the user to the first node: CREATE GLOBAL INDEX class_gsi ON table1(classid) CONTAINING(name) DISTRIBUTE BY HASH(classid). CREATE GLOBAL INDEX indicates to create a global secondary index, CONTAINING indicates an additional key, and DISTRIBUTE BY HASH indicates to distribute based on the hash distribution manner. A meaning of the statement is to create, on the base table 1 whose distribution key is the class ID, the global secondary index class_gsi whose index key and distribution key are the class IDs, distribution manner is hash distribution, and additional key is the student name. Similarly, when the base table is the base table 2 in the scenario described in Example 2, the first indication may be the following SQL statement entered by the user to the first node: CREATE GLOBAL INDEX class_gsi ON table2(classid) CONTAINING(name) DISTRIBUTE BY HASH(classid). A meaning of the statement is to create, on the base table 2 whose distribution key is the class ID, the global secondary index class_gsi whose index key and distribution key are the class IDs, distribution manner is hash distribution, and additional key is the student name.

S402: The first node sends, based on the first indication, a first request to a second node configured to store the base table, where the first request is used to request to obtain first target information, and the first target information includes the at least one attribute in the base table.

In some embodiments of this application, after receiving the first indication, the first node may determine, based on the first indication, the base table for which the global secondary index needs to be created, obtain stored metadata of the base table, further generate, based on the metadata of the base table and information that is about the global secondary index to be created and that is indicated by the first indication, metadata of the global secondary index that needs to be created, and finally generate the first request based on the metadata of the global secondary index and the metadata of the base table.

In some embodiments of this application, the first target information may be used as information included in the global secondary index. In some embodiments of this application, the first target information includes at least the location information in the base table and the at least one attribute, and the location information indicates a location, in the base table, of the data that corresponds, in the base table, to the data in the global secondary index. In some embodiments of this application, the first target information may further include version information, the version information indicates a version of the data that corresponds, in the base table, to the data in the global secondary index, and a version of each piece of data is used to determine whether the corresponding data is valid. For the location information and the version information in the global secondary index, refer to the related descriptions in the foregoing embodiment. Details are not described herein again.

For example, when the base table is the base table 1 in the scenario described in Example 1 or the base table 2 in the scenario described in Example 2, the first target information may include two attributes: the class ID and the student name in the base table, and the location information and the version information that correspond to the data in the base table. For example, when the base table is the base table 1 in the scenario described in Example 1, the first request may be the following SQL statement: INSERT INTO class_gsi (classid, name, location information, version information) SELECT classid, name, location information, version information FROM table1. INSERT INTO means insert into, and SELECT means select. A meaning of the statement is to select the class ID, the student name, the location information, and the version information from the base table 1 and insert the class ID, the student name, the location information, and the version information into the global secondary index class_gsi. Similarly, when the base table is the base table 2 in the scenario described in Example 2, the first request may be the following SQL statement: INSERT INTO class_gsi (classid, name, location information, version information) SELECT classid, name, location information, version information FROM table2. A meaning of the statement is to select the class ID, the student name, the location information, and the version information from the base table 2 and insert the class ID, the student name, the location information, and the version information into the global secondary index class_gsi.

In some embodiments of this application, at least one first attribute in the at least one attribute in the first target information is used as an index key of the global secondary index, and an attribute other than the at least one first attribute in the at least one attribute and information other than the at least one attribute in the first target information are used as additional keys of the global secondary index. The at least one first attribute may be an attribute indicated by the user. For example, in the foregoing example, the at least one first attribute includes the attribute the class ID in the base table, and an attribute other than the at least one first attribute in the at least one attribute is the attribute the student name.

In a possible case, location information corresponding to each piece of data may include first location information and second location information. The first location information indicates a node in which the data is located, and the second location information indicates a storage location of the data in the node in which the data is located. For details, refer to the related descriptions in the foregoing embodiment. Details are not described herein again.

In another possible case, the location information may include second location information and a target distribution key used to determine first location information. The target distribution key is a distribution key of the base table, the first location information indicates a node in which the data is located, and the second location information indicates a storage location of the data in the node in which the data is located. For details, refer to the related descriptions in the foregoing embodiment. Details are not described herein again.

S403: The first node receives the first target information from the second node, and creates the global secondary index based on the first target information.

In some embodiments of this application, in an optional implementation, after receiving the first target information from the second node, if the first node determines that the location information corresponding to the data in the first target information includes the first location information and the second location information, the first node may directly use the first target information as information included in the global secondary index, and store the first target information in at least one data node in a distributed manner. Specifically, the first node may calculate, according to a distribution algorithm corresponding to the distribution manner used by the global secondary index, the data that is in the first target information and that is used as the distribution key of the global secondary index, determine, based on a calculation result, a node configured to store the corresponding data, and then send the corresponding data to the corresponding node for storage.

In some embodiments of this application, in an optional implementation, after receiving the first target information from the second node, if the first node determines that the location information corresponding to the data in the first target information includes the target distribution key and the second location information, the first node may first determine, based on target distribution keys corresponding to pieces of data, first location information corresponding to the pieces of data, then use, as information included in the global secondary index, the determined first location information corresponding to the pieces of data and information in the first target information other than the target distribution key corresponding to the pieces of data, and store the information in at least one data node in a distributed manner. Alternatively, the first node may directly send the target information to the corresponding data node. After receiving the target information, the data node may determine, based on the target distribution key corresponding to pieces of data in the target information, the first location information corresponding to the pieces of data, and store the determined first location information and information, in the first target information, other than the target distribution key corresponding to each piece of data as information included in the global secondary index.

For example, for the at least one attribute included in the first target information, the at least one attribute includes the first data. For the first data, when determining that the location information corresponding to the first data includes the second location information and the target distribution key, the first node may determine the corresponding first location information based on the target distribution key. Then, the first data, the first location information, and the second location information is used as the tuple corresponding to the first data in the global secondary index, and the tuple corresponding to the first data is stored in a second data node. The second data node is included in the at least one data node. A manner of processing other data in the at least one attribute is similar to a manner of processing the first data. After the foregoing processing process is performed on all the data of the at least one attribute, creation of the global secondary index may be completed.

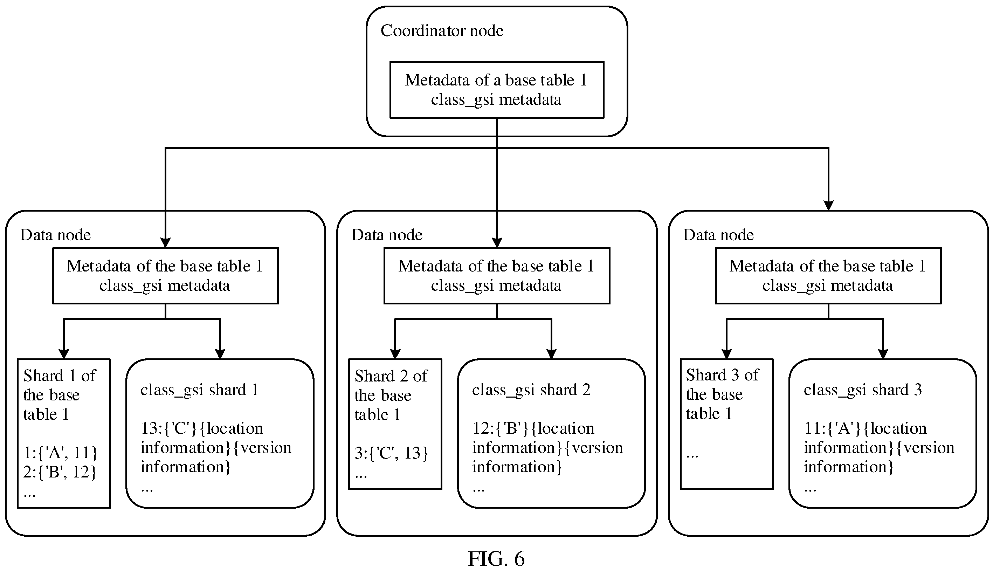

For example, when the base table is the base table 1 in the scenario described in Example 1, and the created global secondary index is class_gsi, the first target information may include 13:{'C'} {location information} {version information}, 12:{'B'}{location information}{version information}, and 11:{'A'}{location information}{version information}. Location information and version information in each group of data are location information and version information of data (tuple) corresponding to the group of data in the base table. For example, location information and version information in 13: {'C'} {location information} {version information} are location information and version information of a third row of data (3:{'C', 13}) in the base table 1, and location information and version information in 12: {'B'} {location information}{version information} are location information and version information of a second row of data (2:{'B', 12}) in the base table 1. After the first node uses the first target information as the information included in class_gsi and stores the information in the plurality of data nodes in a distributed manner, a distribution status of class_gsi in the distributed database is shown in FIG. 6. The metadata of class_gsi is stored in both the coordinator node and each data node, and data included in class_gsi may be separately stored in the plurality of data nodes by shard. For example, the data in class_gsi may be divided into three shards, and data in each shard is stored in one data node. Data in class_gsi included in a shard 1 is 13:{'C'} {location information}{version information}, data in class_gsi included in a shard 2 is 12:{'B'}{location information} {version information}, and data in class_gsi included in a shard 3 is 11: {'A'} {location information} {version information}.

In some embodiments of this application, after creating the global secondary index of the base table, the first node may further rebuild the global secondary index of the base table. Specifically, after receiving the second indication indicating to rebuild the global secondary index, the first node may indicate, based on the second indication, the node configured to store the global secondary index to delete the stored global secondary index, and send a second request to the second node. The second request is used to request to obtain second target information, the second target information is used to generate a rebuilt global secondary index, the second target information includes data, in the base table, that belongs to at least one target attribute, and the at least one target attribute is at least one attribute included in the rebuilt global secondary index. After receiving the second target information from the second node, the first node may rebuild the global secondary index based on the second target information.

In some embodiments of this application, the second indication may be an indication that is delivered by the user and that is for rebuilding the global secondary index, or may be an indication that is sent by the data node after the base table is rebuilt and that is for rebuilding the global secondary index of the base table.

In some embodiments of this application, a specific operation performed when the node configured to store the global secondary index deletes the stored global secondary index may be marking the global secondary index as unavailable or invalid. In addition, the global secondary index and other to-be-deleted information may be uniformly deleted in a subsequent processing process.

In some embodiments of this application, after receiving the second indication, the first node may update the metadata of the base table and the metadata of the global secondary index based on the second indication, and then generate the second request based on updated metadata of the base table and updated metadata of the global secondary index. For an implementation process in which the first node requests the second target information from the second node and rebuilds the global secondary index based on the second target information, refer to the implementation process in which the first node requests the first target information from the second node and creates the global secondary index based on the first target information in the foregoing embodiment. Details are not described herein again.

For example, based on the foregoing embodiment, in the scenario described in Example 1, when the user finds, in a use process, that a type of the attribute the student name in the base table 1 is a variable-length character varchar(10) type, and a maximum length of a name supported by the type is 10. However, a length of a student name in the student information that needs to be inserted into the base table 1 is 15, and exceeds the maximum length of the attribute the student name. In this case, information about the student cannot be inserted into the base table. Therefore, the maximum length of the student name attribute needs to be increased. The coordinator node may convert a type of the attribute the student name in the base table 1 into varchar (50) by using a distributed database alter (ALTER) instruction. In this case, when the global secondary index class_gsi of the base table 1 in the foregoing embodiment has been created, the global secondary index class_gsi needs to be correspondingly rebuilt. In this scenario, a corresponding procedure of rebuilding the global secondary index class_gsi may include the following steps.
(1) After receiving an indication for rebuilding the base table 1, the coordinator node updates the metadata of the base table 1 and the metadata of the class_gsi based on the indication, and rebuilds the base table 1 based on the indication.

Altering (namely, a rebuild operation) performed on the base table 1 is to alter a type of the attribute the student name in the base table 1 from varchar(10) to varchar(50). Correspondingly, that the coordinator node updates the metadata of the base table 1 and the metadata of the class_gsi is to alter a type of the attribute the student name in the metadata from varchar(10) to varchar(50). After updating the metadata of the base table 1 and the metadata of class_gsi, the coordinator node indicates the data node to perform same update on the metadata of the base table 1 and the metadata of the class_gsi. After updating the metadata of the base table 1 and the metadata of the class_gsi based on the indication of the coordinator node, the data node may return an update success notification to the coordinator node, so that the coordinator node performs next processing.

For example, the coordinator node rebuilding class_gsi may be triggered by an event of rebuilding the base table 1, in other words, the coordinator node automatically rebuilds class_gsi after rebuilding the base table 1. The indication for rebuilding the base table 1 received by the coordinator node may be the following SQL statement: ALTER TABLE table1 ALTER COLUMN name TYPE varchar(50). ALTER TABLE indicates to alter the base table, ALTER COLUMN indicates to alter the column, and TYPE indicates the type. A meaning of the statement is to alter a data type of a student name column in the base table 1 to the varchar(50) type.

(2) After rebuilding the base table 1, the coordinator node deletes the data in the created global secondary index class_gsi.

Optionally, the coordinator node may mark the data in the created global secondary index class_gsi as unavailable or invalid.

(3) The coordinator node generates and executes a reconstructed SQL statement, where the SQL statement indicates to select the global secondary index data from the base table 1 and insert the selected global secondary index data into class_gsi.

For example, a reconstructed SQL statement generated by the coordinator node may be: INSERT INTO class_gsi (classid, name, location information, version information) SELECT classid, name, location information, version information FROM table1. This statement indicates to select classid, name, location information, and version information from the base table 1, and insert the information into class_gsi.

(4) The coordinator node indicates the data node to select the global secondary index data from the base table 1, and receives the global secondary index data from the data node.

In this step, the coordinator node may generate a data obtaining request (namely, the second request in the foregoing embodiment) based on the metadata in the base table 1 and the metadata of class_gsi, and send the data obtaining request to the data node. The data node may scan the data in the base table 1 based on updated attribute information of class_gsi carried in the request, and return the data obtained through scanning to the coordinator node. The data obtained by the data node through scanning includes but is not limited to attributes (namely, two attributes: the class ID and the student name) that are included in the base table 1 and that are used as an index key and an additional key of class_gsi and location information.

(5) The coordinator node stores the global secondary index data in the data node, to complete rebuilding of the global secondary index class_gsi.

The coordinator node may calculate, according to a hash distribution algorithm, an attribute that is in the global secondary index data and that is used as a distribution key of class_gsi, namely, the class ID, determine, based on a calculation result, the data node configured to store the global secondary index data, and then indicate the data node to insert the global secondary index data into class_gsi for storage.

In the foregoing process, after the data in the created global secondary index class_gsi is deleted, a process of rebuilding class_gsi by the coordinator node and the data node is the same as the process of creating class_gsi in the foregoing embodiment. Details are not described herein again.

In the foregoing embodiment, the global secondary index of the base table includes the location information corresponding to the data in the base table, instead of the primary key, the distribution key, or the partition key of the base table. Therefore, the global secondary index of the base table does not need to include the primary key, the distribution key, or the partition key of the base table, so that a data volume of the global secondary index of the base table can be appropriately reduced. Especially when the primary key and the distribution key of the base table relate to a large quantity of attribute columns, a volume of data that needs to be maintained after the global secondary index is created can be significantly reduced, and efficiency of using the global secondary index can be improved. Based on the foregoing method, after creating the base table, the first node may synchronously create the global secondary index of the base table, so that high consistency between the base table data and the global secondary index data can be ensured, and availability of the global secondary index can be improved. In addition, the first node can create and rebuild the global secondary index of the base table based on an original system architecture of the distributed database, so that scalability of the distributed database can be ensured. In a process of creating/rebuilding the global secondary index, interaction between the first node and the second node mainly involves transmission of data in the global secondary index. Therefore, a relatively small amount of data is processed, so that processing pressure of the distributed database can be reduced, and performance of the distributed database can be ensured. In conclusion, in the foregoing method, a global secondary index with high availability can be created when performance and costs of a distributed database are ensured.

The following describes an implementation process of the foregoing method with reference to a specific example by using an example in which the first node is the coordinator node, and the second node is the data nodes in the foregoing embodiment.

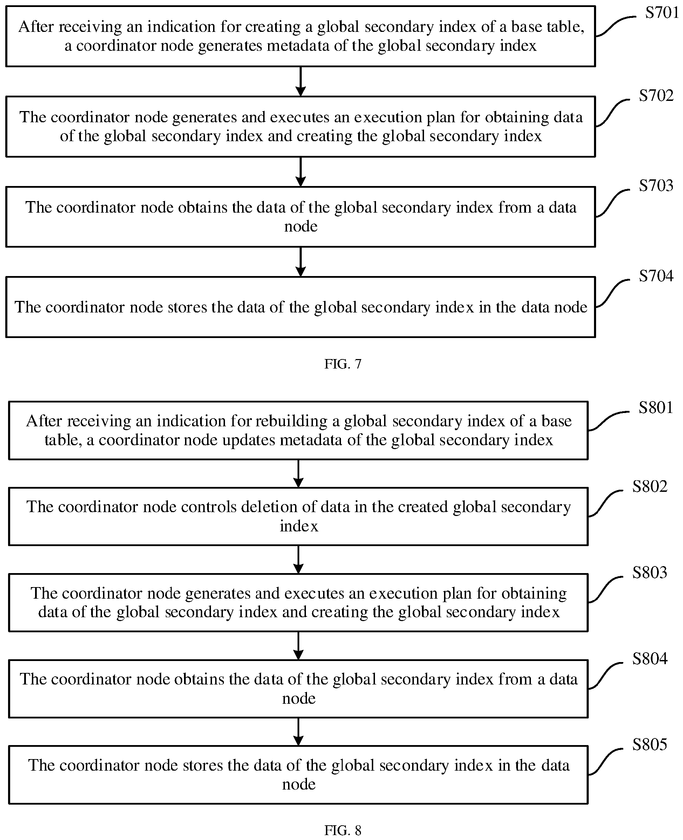

FIG. 7 is a flowchart of a method for creating a global secondary index in a distributed database according to an embodiment of this application. As shown in FIG. 7, a procedure of the method may include the following steps.

S701: After receiving an indication for creating a global secondary index of a base table, a coordinator node generates metadata of the global secondary index.

In this step, after receiving the indication for creating the global secondary index of the base table, the coordinator node first generates, based on the metadata of the created base table and with reference to the indication, the metadata of the corresponding global secondary index that needs to be created, and stores the metadata. The metadata of the global secondary index includes but is not limited to information like a name of the global secondary index, an attribute included in the global secondary index, and a data type. After generating the metadata of the global secondary index, the coordinator node may indicate each data node that stores the base table to generate, based on the created metadata of the base table and with reference to the indication, the corresponding metadata of the global secondary index that needs to be created, and store the metadata. Alternatively, the coordinator node may deliver the metadata of the global secondary index generated by the coordinator node to each data node that stores the base table for storage. Based on this step, both the coordinator node and each data node that stores the base table can store the metadata of the global secondary index.

S702: The coordinator node generates and executes an execution plan for obtaining data of the global secondary index and creating the global secondary index.

After determining that both the coordinator node and the data node generate and store the metadata of the global secondary index in the foregoing step, the coordinator node may perform this step. In this step, the coordinator node may generate, based on the base table and the metadata of the global secondary index, an execution plan for obtaining the global secondary index data and creating the global secondary index. The execution plan may be the following SQL statement: INSERT INTO {GSI} xxx SELECT xxx FROM {TABLE}, and execution starts based on the execution plan, in other words, the following steps S703 and S704 are performed. In the SQL statement, {GSI} indicates the name of the global secondary index, {table} indicates the name of the base table, and "xxx" indicates the name of the global secondary index or the attribute in the base table.

S703: The coordinator node obtains the data of the global secondary index from a data node.

In this step, the coordinator node may request, based on the generated execution plan, the data node to obtain the data included in the global secondary index that needs to be created. After receiving the request, the data node may query, based on the request, the base table to obtain the data included in the global secondary index, and return the found data to the coordinator node. The data queried by the data node includes but is not limited to an index key and an additional key of the global secondary index, and location information and version information of data in the base table. The location information of the data in the base table may be a data address of the data in the base table in the data node, a distribution key of the base table, and the like.

S704: The coordinator node stores the data of the global secondary index in the data node.

After all data nodes involved in the foregoing steps successfully obtain the global secondary index data and return the global secondary index data to the coordinator node, the coordinator node may perform this step. In this step, the coordinator node may determine, based on the obtained information, the data node configured to store the global secondary index data, and insert the obtained global secondary index data into the global secondary index in the corresponding data node, so as to create the global secondary index.

The following describes the foregoing procedure by using an example with reference to a specific scenario.

### Example 1

For example, the base table is applied to a mall system. A name of the base table may be base table 3 (table3), and data included in the base table may be data shown in Table 5 below.

**Table 5 Data in the base table 3**

| Counter ID (counterid) | Floor number (fno) | Cashier ID (cashierid) |
|---|---|---|
| 1 | 1 | STF100023 |
| 1 | 1 | STF100025 |
| 2 | 1 | STF231567 |
| 3 | 2 | MNG695478 |
| 4 | 3 | STF777777 |
| 4 | 3 | STF666666 |

The base table 3 shown in Table 5 may include three columns × six rows of data. The three columns of data respectively belong to three attributes: the counter identity document (identity document, ID), the floor number, and the cashier ID, each row of data corresponds to the information about a counter/cashier. In this case, when the base table in this embodiment of this application is the base table 3, the at least one attribute included in the base table is the three attributes: the counter ID, the floor number, and the cashier ID shown in Table 5.

Table definition information (or table attribute information) of the base table 3 shown in Table 5 is shown in Table 6 below.

**Table 6 Definition information of the base table 3**

| Table name | Base table 3 (table3) | | |
|---|---|---|---|
| Attribute column # | Column name | Data type | Remark |
| 1 | counterid | integer | Counter ID, distribution key |
| 2 | fno | integer | Floor number |
| 3 | cashierid | integer | Cashier ID |
| Distribution key | range (counterid) | | |

It may be determined based on the foregoing Table 6 that a name of the base table is base table 3, and the base table includes three attributes, which are specifically three columns of data corresponding to the counter ID, the floor number, and the cashier ID. The base table 3 does not have a primary key. Because a total number of counters is generally relatively fixed, the attribute the counter ID may be used as the distribution key of the base table 3, and data in the base table 3 is stored in a range distribution manner. The data in the attributes the counter ID, the floor number, and the cashier ID is integer type data. The information indicated in Table 6 may be stored in the first node as metadata of the base table 3. Certainly, the metadata of the base table 3 includes but is not limited to the information indicated in Table 6, and may alternatively include more or less information than that in Table 6.

If the global secondary index cashier_gsi of the base table 3 needs to be created, cashier_gsi is required to include three attributes: the counter ID, the cashier ID, and the floor number in the base table 3, the attribute the cashier ID is used as an index key and a distribution key of cashier_gsi, the attributes the counter ID and the floor number are used as additional keys of cashier_gsi, and a distribution manner used by cashier_gsi is hash distribution. A process in which the coordinator node creates cashier_gsi may include the following steps.
(1) The coordinator node generates metadata of cashier_gsi based on the received indication for creating cashier_gsi and the metadata of the base table 3, and indicates the data node to generate the metadata of cashier_gsi.

For example, an indication for creating cashier_gsi received by the coordinator node may be the following SQL statement: CREATE GLOBAL INDEX cashier_gsi ON table3(cashierid) CONTAINING (counterid,fno) DISTRIBUTE BY HASH(cashierid). A meaning of the statement is to create, on the base table 3 whose distribution key is the counter ID, the global secondary index cashier_gsi whose index key and distribution key are the class IDs, distribution manner is hash distribution, and additional key is the student name.

(2) The coordinator node generates and executes a reconstructed SQL statement, where the SQL statement indicates to select the global secondary index data from the base table 3 and insert the selected global secondary index data into cashier_gsi.

For example, a reconstructed SQL statement generated by the coordinator node may be: INSERT INTO cashier_gsi(cashierid, counterid, fno, location information, version information) SELECT cashierid, counterid, fno, location information, version information FROM table3. This statement indicates to select cashierid, counterid, fno, location information, and version information from base table 3, and insert the information into cashier_gsi.

(3) The coordinator node indicates the data node to select the global secondary index data from the base table 3, and receives the global secondary index data from the data node.

The data node may scan data in the base table 3 based on the attribute information of the global secondary index cashier_gsi, select an attribute that needs to be included in cashier_gsi and location information of the data in the base table 3, and send the information to the coordinator node.

Optionally, the location information returned by the data node to the coordinator node may be the distribution key of the base table and the storage location information (namely, the second location information in the foregoing embodiment) of the data in the base table in the node. In this scenario, the distribution key counter ID of the base table 3 is included in an attribute of cashier_gsi, and does not need to be returned separately. In this case, the data node may directly return, to the coordinator node, data of three attributes the cashier ID, the counter ID, and the floor number that are scanned in the base table 3, and second location information of data corresponding to the data of the three attributes in the base table 3.

(4) The coordinator node stores the global secondary index data in the data node.

The coordinator node may calculate, according to a hash distribution algorithm, an attribute that is in the global secondary index data and that is used as a distribution key of cashier_gsi, namely, the cashier ID, determine, based on a calculation result, the data node configured to store the global secondary index data, then indicate the determined data node to create cashier_gsi, and insert the global secondary index data into cashier_gsi created by the corresponding data node for storage.

### Example 2

In Example 1, the counter ID in the base table 3 is not unique, but the combination of the counter ID and the cashier ID is unique. Therefore, a primary key constraint may be added to the counter ID and the cashier ID in the base table 3, in other words, the two attributes the counter ID and the cashier ID are used as the primary keys of the base table 3. Other attribute information of the base table 3 remains unchanged, and is the same as that in Instance 1. In this scenario, a process of creating the global secondary index of the base table 3 is the same as the process of creating the global secondary index of the base table 3 in Example 1, and is not affected by the primary key constraint. For example, in this scenario, if the global secondary index cashier_gsi of the base table 3 needs to be created, cashier_gsi is required to include three attributes: the counter ID, the cashier ID, and the floor number in the base table 3, the attribute the cashier ID is used as an index key and a distribution key of cashier_gsi, the attributes the counter ID and the floor number are used as additional keys of cashier_gsi, and a distribution manner used by cashier_gsi is hash distribution. A process in which the coordinator node creates cashier_gsi is the same as the process in which the coordinator node creates cashier_gsi in the foregoing embodiment, and details are not described herein again.

In the foregoing method, regardless of whether a primary key exists in the base table, the coordinator node may create the global secondary index. In addition, the global secondary index may be created after the base table is created, so that high consistency between the global secondary index data and the base table data can be maintained, and availability of the created global secondary index can be improved.

FIG. 8 is a flowchart of a method for rebuilding a global secondary index in a distributed database according to an embodiment of this application. As shown in FIG. 8, a procedure of the method may include the following steps.

S801: After receiving an indication for rebuilding a global secondary index of a base table, a coordinator node updates metadata of the global secondary index.

In this step, after receiving the indication for rebuilding the global secondary index of the base table, the coordinator node first updates and stores the created base table metadata based on the indication, and may update the base table. Then, the coordinator node may update and store the created metadata of the global secondary index based on the updated base table metadata, or regenerate and store the metadata of the global secondary index. The metadata of the global secondary index includes but is not limited to information like a name of the global secondary index, an attribute included in the global secondary index, and a data type. After updating or regenerating the metadata of the global secondary index, the coordinator node may indicate each data node that stores the global secondary index to update the corresponding metadata of the global secondary index based on the updated metadata or regenerate the metadata of the global secondary index based on the instruction. Alternatively, the coordinator node may deliver metadata of the global secondary index that is updated or regenerated by the coordinator node to each data node that stores the global secondary index for storage. Based on this step, the coordinator node and each data node that stores the base table can store updated or regenerated metadata of the global secondary index.

S802: The coordinator node controls deletion of data in the created global secondary index.

In this step, the coordinator node may indicate the data node that stores the global secondary index to separately delete the stored data in the global secondary index.

S803: The coordinator node generates and executes an execution plan for obtaining data of the global secondary index and creating the global secondary index.

After determining that both the coordinator node and the data node successfully update or re-generate the metadata of the global secondary index in the foregoing step, the coordinator node may perform this step. In this step, the coordinator node may generate, based on the base table and the metadata of the global secondary index, an execution plan for obtaining the global secondary index data and creating the global secondary index. The execution plan may be the following SQL statement: INSERT INTO {GSI} xxx SELECT xxx FROM {TABLE}, and execution starts based on the execution plan, in other words, the following steps S804 and S805 are performed. In the SQL statement, {GSI} indicates the name of the global secondary index, {table} indicates the name of the base table, and "xxx" indicates the name of the global secondary index or the attribute in the base table.

S804: The coordinator node obtains the data of the global secondary index from a data node.

In this step, the coordinator node may request, based on the generated execution plan, the data node to obtain the data included in the global secondary index that needs to be rebuilt. After receiving the request, the data node may query, based on the request, the base table to obtain the data included in the global secondary index, and return the found data to the coordinator node. The data queried by the data node includes but is not limited to an index key and an additional key of the global secondary index, and location information and version information of data in the base table. The location information of the data in the base table may be a data address of the data in the base table in the data node, a distribution key of the base table, and the like.

S805: The coordinator node stores the data of the global secondary index in the data node.

After all data nodes involved in the foregoing steps successfully obtain the global secondary index data and return the global secondary index data to the coordinator node, the coordinator node may perform this step. In this step, the coordinator node may determine, based on the obtained information, the data node configured to store the global secondary index data, and insert the obtained global secondary index data into the global secondary index in the corresponding data node, so as to create the global secondary index.

The following describes the foregoing procedure by using an example with reference to a specific scenario.

### Example 3

Based on the scenario described in Example 1, when a floor number naming rule is modified in the mall system, and a first floor is altered to a G (ground) floor, because a type of the floor number attribute in the base table 3 is integer, and the G floor cannot be directly carried, a data type of the floor number attribute in the base table 3 needs to be altered. Specifically, the type of the floor number attribute may be altered from integer to char(2), so that the floor number attribute can carry the G floor. In this way, the modified floor number naming rule is applicable. In this scenario, because the modification of the data type of the attribute involves rebuilding of the entire base table (namely, the base table 3), the global secondary index (namely, cashier_gsi) of the base table also needs to be rebuilt accordingly. In this scenario, a corresponding procedure of rebuilding the global secondary index class_gsi may include the following steps.
(1) After receiving an indication for rebuilding the base table 3, the coordinator node updates the metadata of the base table 3 and the metadata of the cashier_gsi based on the indication, and rebuilds the base table 3 based on the indication.

Update (namely, a rebuild operation) performed on the base table 3 is to alter a type of the attribute the floor number in the base table 3 from integer to char(2). Correspondingly, the coordinator node updating metadata of the base table 3 and metadata of cashier_gsi is to alter the type of the attribute the floor number in the metadata from integer to char(2). After updating the metadata of the base table 3 and the metadata of cashier_gsi, the coordinator node may indicate the data node to perform same update on the metadata of the base table 3 and the metadata of the cashier_gsi. After updating the metadata of the base table 3 and the metadata of the cashier_gsi based on the indication of the coordinator node, the data node may return an update success notification to the coordinator node, so that the coordinator node performs next processing.

For example, the indication for rebuilding the base table 3 received by the coordinator node may be the following SQL statement: ALTER TABLE table3 ALTER COLUMN fno TYPE char(2). ALTER TABLE indicates to alter the base table, ALTER COLUMN indicates to alter the column, and TYPE indicates the type. A meaning of the statement is to alter a data type of the floor number attribute in the base table 3 to the char(2) type.

(2) After rebuilding the base table 3, the coordinator node deletes the data in the created global secondary index cashier_gsi.

Optionally, the coordinator node may mark the data in the created global secondary index cashier_gsi as unavailable or invalid.

(3) The coordinator node generates and executes a reconstructed SQL statement, where the SQL statement indicates to select the global secondary index data from the base table 3 and insert the selected global secondary index data into cashier_gsi.

For example, a reconstructed SQL statement generated by the coordinator node may be: INSERT INTO cashier_gsi (cashierid, counterid, fno, location information, version information) SELECT cashierid, counterid, fno, location information, version information FROM table3. This statement indicates to select cashierid, counterid, fno, location information, and version information from base table 3, and insert the information into cashier_gsi.

(4) The coordinator node indicates the data node to select the global secondary index data from the base table 3, and receives the global secondary index data from the data node.

In this step, the coordinator node may generate a data obtaining request (namely, the second request in the foregoing embodiment) based on the metadata in the base table 3 and the metadata of cashier_gsi, and send the data obtaining request to the data node. The data node may scan the data in the base table 3 based on updated attribute information of cashier_gsi carried in the request, and return the data obtained through scanning to the coordinator node. The data obtained by the data node through scanning includes but is not limited to attributes (namely, three attributes: the counter ID, the cashier ID, and the floor number) that are included in the base table 3 and that are used as an index key and an additional key of cashier_gsi and location information.

(5) The coordinator node stores the global secondary index data in the data node, to complete rebuilding of the global secondary index cashier_gsi.

The coordinator node may calculate, according to a hash distribution algorithm, an attribute that is in the global secondary index data and that is used as a distribution key of cashier_gsi, namely, the cashier ID, determine, based on a calculation result, the data node configured to store the global secondary index data, and then indicate the data node to insert the global secondary index data into cashier_gsi for storage.

After the foregoing rebuilding of cashier_gsi is completed, the user may update data in the base table 3 as required, for example, update a floor number 1 of a floor 1 in the base table 3 to a G floor.

In the foregoing process, after the data in the created global secondary index cashier_gsi is deleted, a process of rebuilding cashier_gsi by the coordinator node and the data node is the same as the process of creating cashier_gsi in the foregoing embodiment. Details are not described herein again.

In the scenario described in Example 2, if the global secondary index cashier_gsi of the base table 3 needs to be rebuilt in Example 3, an implementation same as that in Example 3 may be used for implementation, and details are not described herein again.

It should be noted that the specific implementation procedures provided in the foregoing embodiments are merely examples for describing the method procedures applicable to embodiments of this application. For specific execution, refer to the descriptions in the foregoing embodiments. In addition, an execution sequence of the steps in each implementation procedure may be correspondingly adjusted based on an actual requirement, or another step may be added, or some steps may be reduced. This is not specifically limited in embodiments of this application.

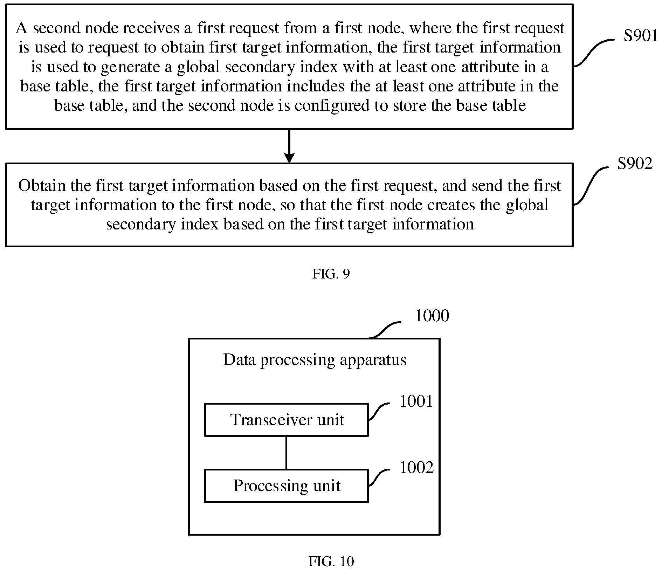

Refer to FIG. 9. A method for creating a global secondary index in a distributed database according to an embodiment of this application may include the following steps.

S901: A second node receives a first request from a first node, where the first request is used to request to obtain first target information, the first target information is used to generate a global secondary index with at least one attribute in a base table, the first target information includes the at least one attribute in the base table, and the second node is configured to store the base table.

S902: Obtain the first target information based on the first request, and send the first target information to the first node, so that the first node creates the global secondary index based on the first target.

The second node may be the second node described in the foregoing embodiment, and the first node may be the first node described in the foregoing embodiment. For specific execution of the steps in the method, refer to the method in the foregoing embodiment. Details are not described herein again.

Based on the foregoing embodiments and a same concept, an embodiment of this application further provides a data processing apparatus, configured to implement a function of the node provided in embodiments of this application.

FIG. 10 shows a data processing apparatus 1000 according to this application. The data processing apparatus 1000 may be a node device, or may be a chip or a chip system in a node device.

Specifically, the data processing apparatus 1000 includes a transceiver unit 1001 and a processing unit 1002. The transceiver unit 1001 is configured to receive data sent by an external data processing apparatus and send data to the external data processing apparatus.

When the data processing apparatus 1000 is implemented as the first node in the foregoing embodiments, the transceiver unit 1001 and the processing unit 1002 cooperate with each other, and may be configured to perform the method, provided in embodiments of this application, performed by the first node.

When the data processing apparatus 1000 is implemented as the second node in the foregoing embodiments, the transceiver unit 1001 and the processing unit 1002 cooperate with each other, and may be configured to perform the method, provided in embodiments of this application, performed by the second node.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software function module.

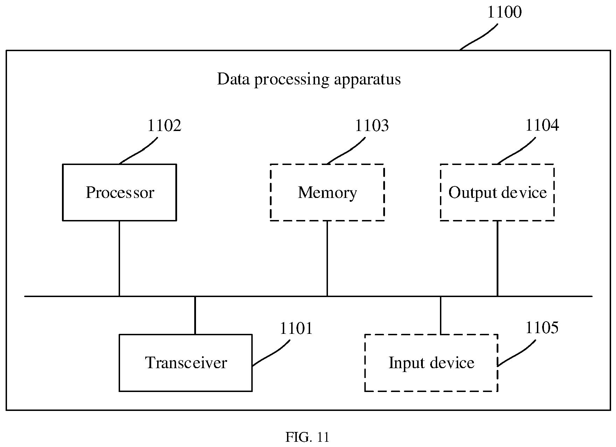

Based on the foregoing embodiments and a same concept, an embodiment of this application further provides a data processing apparatus, configured to implement a function of the node provided in embodiments of this application. FIG. 11 shows a data processing apparatus 1100 according to an embodiment of this application. The data processing apparatus 1100 may be a node device, or may be a chip or a chip system in a node device.

In some embodiments of this application, the data processing apparatus 1100 may alternatively be a network device, an electronic device, a chip, an integrated circuit, or another structure that can perform the method provided in embodiments of this application.

For example, the data processing apparatus 1100 includes a transceiver 1101 and at least one processor 1102. The processor 1102 is coupled to the transceiver 1101. In embodiments of this application, the coupling is indirect coupling or communication connection between apparatuses, units, or modules, may be in an electrical form, a mechanical form, or another form, and is used for information exchange between the apparatuses, units, or modules.

Specifically, the transceiver 1101 may be a circuit, a bus, a communication interface, or any other module that may be configured to perform information exchange, and may be configured to receive or send information.

Optionally, the data processing apparatus 1100 may further include a memory 1103. The memory 1103 is coupled to the transceiver 1101 and the processor 1102, and is configured to store program instructions.

The processor 1102 is configured to invoke the program instructions stored in the memory 1103, so that the data processing apparatus 1100 performs the method that is performed by the first node or the second node and that is in the methods provided in embodiments of this application.

The transceiver 1101 is configured to receive and send a radio frequency signal, and is coupled to a receiver and a transmitter of the data processing apparatus 1100. The transceiver 1101 communicates with a communication network and another device, for example, a wireless local area network (Wireless Local Area Networks, WLAN), a Bluetooth communication network, or a mobile network, by using the radio frequency signal.

In a specific implementation, the memory 1103 may include a high-speed random access memory, and may further include a non-volatile memory, for example, one or more magnetic disk storage devices, a flash device, or another non-volatile solid-state storage device. The memory 1103 may store an operating system (which is referred to as a system for short below), for example, an embedded operating system like Android, iOS, Windows, or Linux. The memory 1103 may be configured to store a program for implementing this embodiment of this application. The memory 1103 may further store a network communication program. The network communication program may be used to communicate with one or more additional devices, one or more user equipments, and one or more network devices.

The processor 1102 may be a general-purpose central processing unit (Central Processing Unit, CPU), a microprocessor, an application-specific integrated circuit (Application-Specific Integrated Circuit, ASIC), or one or more integrated circuits configured to control program execution of the solutions in this application.

In some embodiments, the data processing apparatus 1100 may further include an output device 1104 and an input device 1105. The output device 1104 communicates with the processor 1102, and may display information in a plurality of manners. For example, the output device 1104 may be a liquid crystal display (Liquid Crystal Display, LCD), a light emitting diode (Light Emitting Diode, LED) display device, a Cathode Ray Tube (cathode ray tube, CRT) display device, a projector (projector), or the like. The input device 1105 communicates with the processor 1102, and may receive an input from a user in a plurality of manners. For example, the input device 1105 may be a mouse, a keyboard, a touchscreen device, or a sensor device. To facilitate use of the output device 1104 and the input device 1105 by a user, in some embodiments, the memory 1103 may further store a user interface program, and the user interface program may vividly display content of an application by using a graphical operation interface, and receive, by using an input control like a menu, a dialog box, or a button, a control operation performed by the user on the application.

In an example, when the data processing apparatus 1100 is implemented as the first node in the foregoing embodiments, the transceiver 1101 the processor 1102 cooperate with each other, and may be configured to perform the method, provided in embodiments of this application, performed by the first node.

In an example, when the data processing apparatus 1100 is implemented as the second node in the foregoing embodiments, the transceiver 1101 the processor 1102 cooperate with each other, and may be configured to perform the method, provided in embodiments of this application, performed by the second node.

Based on the foregoing embodiments and a same concept, an embodiment of this application further provides a data processing apparatus. The apparatus includes a memory and at least one processor. The memory is configured to store a computer program. The processor is configured to execute the computer program stored in the memory, to implement the method provided in the foregoing embodiments.

Based on the foregoing embodiment and a same concept, an embodiment of this application further provides a distributed database system. The system includes a first node and a second node. The first node is configured to implement the method performed by the first node in the foregoing embodiment, and the second node is configured to implement the method performed by the second node in the foregoing embodiment.

Based on the foregoing embodiments and a same concept, an embodiment of this application further provides a computer storage medium. The computer storage medium stores a computer-readable program. When the computer-readable program is run on a computer, the computer is enabled to perform the method provided in the foregoing embodiments.

Based on the foregoing embodiments and a same concept, an embodiment of this application further provides a computer program product. When the computer program product runs on a computer, the computer is enabled to perform the method provided in the foregoing embodiments.

Based on the foregoing embodiments and a same concept, an embodiment of this application further provides a chip. The chip is configured to read a computer program stored in a memory, to perform the method provided in the foregoing embodiments.

Based on the foregoing embodiments and a same concept, an embodiment of this application further provides a chip system. The chip system includes a processor, configured to support a computer apparatus in implementing the method provided in the foregoing embodiments.

In a possible design, the chip system further includes a memory, and the memory is configured to store a program and data that are necessary for the computer apparatus.

In a possible design, the chip system includes a chip, or includes a chip and another discrete component.

Clearly, persons skilled in the art can make various modifications and variations to this application without departing from the scope of this application. This application is intended to cover these modifications and variations of this application provided that they fall within the scope of protection defined by the claims of this application and their equivalent technologies.

## Claims

1. A method for creating a global secondary index in a distributed database, applied to a first node, wherein the method comprises:
receiving a first indication, wherein the first indication indicates to create a global secondary index with at least one attribute in a base table;
sending, based on the first indication, a first request to a second node configured to store the base table, wherein the first request is used to request to obtain first target information, and the first target information comprises the at least one attribute in the base table; and
receiving the first target information from the second node, and creating the global secondary index based on the first target information.

2. The method according to claim 1, wherein the first target information further comprises location information, and the location information indicates a location, in the base table, of a tuple to which data of the at least one attribute belongs.

3. The method according to claim 2, wherein the second node comprises at least one data node, and the data of the at least one attribute comprises first data; and location information corresponding to the first data comprises first location information and second location information; or the location information corresponding to the first data comprises the second location information and a target distribution key used to determine the first location information, and the target distribution key is a distribution key that is in the base table and that corresponds to a tuple to which the first data belongs; and
the first location information indicates a first data node in which the first data is located, and the second location information indicates a storage location of the first data in the first data node.

4. The method according to claim 3, wherein the creating the global secondary index based on the first target information comprises:
when the location information corresponding to the first data comprises the second location information and the target distribution key, determining the first location information based on the target distribution key;
using the first data, the first location information, and the second location information as the tuple corresponding to the first data in the global secondary index; and
storing, in a second data node, the tuple corresponding to the first data.

5. The method according to any one of claims 1 to 3, wherein the creating the global secondary index based on the first target information comprises:
using the first target information as information comprised in the global secondary index; and
storing, in at least one data node in a distributed manner, the information comprised in the global secondary index.

6. The method according to any one of claims 1 to 5, wherein at least one first attribute in the at least one attribute is used as an index key of the global secondary index, and an attribute other than the at least one first attribute in the at least one attribute and information other than the at least one attribute in the first target information are used as additional keys of the global secondary index.

7. The method according to any one of claims 1 to 6, wherein the first target information further comprises version information, the version information indicates a version of the tuple to which the data of the at least one attribute belongs, and a version of each tuple is used to determine whether the corresponding tuple is valid.

8. The method according to any one of claims 1 to 7, wherein after the creating the global secondary index based on the first target information, the method further comprises:
receiving a second indication, wherein the second indication indicates to rebuild the global secondary index;
indicating, based on the second indication, a node configured to store the global secondary index to delete the stored global secondary index, and sending a second request to the second node, wherein the second request is used to request to obtain second target information, the second target information comprises data, in the base table, that belongs to at least one target attribute, and the at least one target attribute is at least one attribute comprised in the to-be-rebuilt global secondary index; and
receiving the second target information from the second node, and rebuilding the global secondary index based on the second target information.

9. The method according to any one of claims 1 to 8, wherein the sending, based on the first indication, a first request to the second node configured to store the base table comprises:
determining the base table and obtaining metadata of the base table based on the first indication;
generating metadata of the global secondary index based on the first indication and the metadata of the base table;
generating the first request based on the metadata of the base table and the metadata of the global secondary index; and
sending the first request to the second node.

10. A method for creating a global secondary index in a distributed database, applied to a second node, wherein the method comprises:
receiving a first request from a first node, wherein the first request is used to request to obtain first target information, the first target information is used to generate a global secondary index with at least one attribute in a base table, the first target information comprises the at least one attribute in the base table, and the second node is configured to store the base table; and
obtaining the first target information based on the first request, and sending the first target information to the first node, so that the first node creates the global secondary index based on the first target information.

11. The method according to claim 10, wherein the first target information further comprises location information, and the location information indicates a location, in the base table, of a tuple to which data of the at least one attribute belongs.

12. The method according to claim 11, wherein the second node comprises at least one data node, and the data of the at least one attribute comprises first data; and location information corresponding to the first data comprises first location information and second location information; or the location information corresponding to the first data comprises the second location information and a target distribution key used to determine the first location information, and the target distribution key is a distribution key that is in the base table and that corresponds to a tuple to which the first data belongs; and
the first location information indicates a first data node in which the first data is located, and the second location information indicates a storage location of the first data in the first data node.

13. The method according to claim 11 or 12, wherein at least one first attribute in the at least one attribute is used as an index key of the global secondary index, and an attribute other than the at least one first attribute in the at least one attribute and information other than the at least one attribute in the first target information are used as additional keys of the global secondary index.

14. The method according to any one of claims 10 to 13, wherein the first target information further comprises version information, the version information indicates a version of the tuple to which the data of the at least one attribute belongs, and a version of each tuple is used to determine whether the corresponding tuple is valid.

15. The method according to any one of claims 10 to 14, wherein after the obtaining the first target information based on the first request, and sending the first target information to the first node, the method further comprises:
deleting the stored global secondary index based on an indication of the first node, and receiving a second request from the first node, wherein the second request is used to request to obtain second target information, the second target information comprises data, in the base table, that belongs to at least one target attribute, and the at least one target attribute is at least one attribute comprised in the to-be-rebuilt global secondary index; and
obtaining the second target information based on the second request, and sending the second target information to the first node, so that the first node rebuilds the global secondary index based on the second target information.

16. A data processing apparatus, used in a first node, wherein the apparatus comprises:
a transceiver unit, configured to receive a first indication, wherein the first indication indicates to create a global secondary index with at least one attribute in a base table; and
a processing unit, configured to send, based on the first indication and by using the transceiver unit, a first request to a second node configured to store the base table, wherein the first request is used to request to obtain first target information, and the first target information comprises the at least one attribute in the base table, wherein
the processing unit is further configured to: receive the first target information from the second node by using the transceiver unit, and create the global secondary index based on the first target information.

17. The apparatus according to claim 16, wherein the first target information further comprises location information, and the location information indicates a location, in the base table, of a tuple to which data of the at least one attribute belongs.

18. The apparatus according to claim 17, wherein the second node comprises at least one data node, and the data of the at least one attribute comprises first data; and location information corresponding to the first data comprises first location information and second location information; or the location information corresponding to the first data comprises the second location information and a target distribution key used to determine the first location information, and the target distribution key is a distribution key that is in the base table and that corresponds to a tuple to which the first data belongs; and
the first location information indicates a first data node in which the first data is located, and the second location information indicates a storage location of the first data in the first data node.

19. The apparatus according to claim 18, wherein when creating the global secondary index based on the first target information, the processing unit is specifically configured to:
when the location information corresponding to the first data comprises the second location information and the target distribution key, determine the first location information based on the target distribution key;
use the first data, the first location information, and the second location information as the tuple corresponding to the first data in the global secondary index; and
store, in a second data node, the tuple corresponding to the first data.

20. The apparatus according to any one of claims 16 to 18, wherein when creating the global secondary index based on the first target information, the processing unit is specifically configured to:
use the first target information as information comprised in the global secondary index; and
store, in at least one data node in a distributed manner, the information comprised in the global secondary index.

21. The apparatus according to any one of claims 16 to 20, wherein at least one first attribute in the at least one attribute is used as an index key of the global secondary index, and an attribute other than the at least one first attribute in the at least one attribute and information other than the at least one attribute in the first target information are used as additional keys of the global secondary index.

22. The apparatus according to any one of claims 16 to 21, wherein the first target information further comprises version information, the version information indicates a version of the tuple to which the data of the at least one attribute belongs, and a version of each tuple is used to determine whether the corresponding tuple is valid.

23. The apparatus according to any one of claims 16 to 22, wherein after creating the global secondary index based on the first target information, the processing unit is further configured to:
receive a second indication by using the transceiver unit, wherein the second indication indicates to rebuild the global secondary index;
indicate, based on the second indication and by using the transceiver unit, a node configured to store the global secondary index to delete the stored global secondary index, and send a second request to the second node, wherein the second request is used to request to obtain second target information, the second target information comprises data, in the base table, that belongs to at least one target attribute, and the at least one target attribute is at least one attribute comprised in the to-be-rebuilt global secondary index; and
receive the second target information from the second node by using the transceiver unit, and rebuild the global secondary index based on the second target information.

24. A data processing apparatus, used in a second node, wherein the apparatus comprises:
a transceiver unit, configured to receive a first request from a first node, wherein the first request is used to request to obtain first target information, the first target information is used to generate a global secondary index with at least one attribute in a base table, the first target information comprises the at least one attribute in the base table, and the second node is configured to store the base table; and
a processing unit, configured to: obtain the first target information based on the first request, and send the first target information to the first node by using the transceiver unit, so that the first node creates the global secondary index based on the first target information.

25. The apparatus according to claim 24, wherein the first target information further comprises location information, and the location information indicates a location, in the base table, of a tuple to which data of the at least one attribute belongs.

26. The apparatus according to claim 25, wherein the second node comprises at least one data node, and the data of the at least one attribute comprises first data; and location information corresponding to the first data comprises first location information and second location information; or the location information corresponding to the first data comprises the second location information and a target distribution key used to determine the first location information, and the target distribution key is a distribution key that is in the base table and that corresponds to a tuple to which the first data belongs; and
the first location information indicates a first data node in which the first data is located, and the second location information indicates a storage location of the first data in the first data node.

27. The apparatus according to claim 25 or 26, wherein the first target information further comprises version information, the version information indicates a version of the tuple to which the data of the at least one attribute belongs, and a version of each tuple is used to determine whether the corresponding tuple is valid.

28. The apparatus according to any one of claims 24 to 27, wherein after obtaining the first target information based on the first request, and sending the first target information to the first node by using the transceiver unit, the processing unit is further configured to:
delete the stored global secondary index based on an indication of the first node, and receive a second request from the first node by using the transceiver unit, wherein the second request is used to request to obtain second target information, the second target information comprises data, in the base table, that belongs to at least one target attribute, and the at least one target attribute is at least one attribute comprised in the to-be-rebuilt global secondary index; and
obtain the second target information based on the second request, and send the second target information to the first node by using the transceiver unit, so that the first node rebuilds the global secondary index based on the second target information.

29. A data processing apparatus, comprising a memory and at least one processor, wherein
the memory is configured to store a computer program; and
the processor is configured to execute the computer program stored in the memory, to implement the method according to any one of claims 1 to 9, or implement the method according to any one of claims 10 to 15.

30. A computer-readable storage medium, wherein the computer-readable storage medium stores a computer-readable program, and when the computer-readable program is run on a computer, the computer is enabled to perform the method according to any one of claims 1 to 9, or perform the method according to any one of claims 10 to 15.

31. A computer program product, wherein when the computer program product runs on a computer, the computer is enabled to perform the method according to any one of claims 1 to 9, or perform the method according to any one of claims 10 to 15.
